(19) Europäisches Patentamt
European Patent Office
Office européen des brevets

(11) EP 4 317 297 A1

(12) EUROPEAN PATENT APPLICATION
published in accordance with Art. 153(4) EPC

(43) Date of publication:
**07.02.2024 Bulletin 2024/06**

(21) Application number: **22780069.5**

(22) Date of filing: **15.03.2022**

(51) International Patent Classification (IPC):
***C08L 23/00*** (2006.01) ***C08L 81/02*** (2006.01)
***C08L 83/04*** (2006.01) ***C08G 75/0209*** (2016.01)
***C08G 75/0259*** (2016.01) ***F16L 11/04*** (2006.01)
***F16L 9/12*** (2006.01)

(52) Cooperative Patent Classification (CPC):
**C08G 75/0209; C08G 75/0259; C08L 23/00; C08L 81/02; C08L 83/04; F16L 9/12; F16L 11/04**

(86) International application number:
**PCT/JP2022/011571**

(87) International publication number:
**WO 2022/209848 (06.10.2022 Gazette 2022/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **29.03.2021 JP 2021054867**
**20.01.2022 JP 2022006985**

(71) Applicant: **Toray Industries, Inc.**
**Tokyo 103-8666 (JP)**

(72) Inventors:
- **HIRASE, Tomohiro**
**Nagoya-shi, Aichi 455-8502 (JP)**
- **ISAGO, Hiroyuki**
**Nagoya-shi, Aichi 455-8502 (JP)**
- **UNOHARA, Takeshi**
**Otsu-shi, Shiga 520-8558 (JP)**
- **HORIUCHI, Shunsuke**
**Nagoya-shi, Aichi 455-8502 (JP)**

(74) Representative: **Mewburn Ellis LLP**
**Aurora Building**
**Counterslip**
**Bristol BS1 6BX (GB)**

# (54) POLYPHENYLENE SULFIDE RESIN COMPOSITION AND MOLDED ARTICLE FORMED FROM SAME

(57) An object of the present invention is to provide a polyphenylene sulfide resin composition having flame retardance, flexibility, and toughness, and a molded product made of the polyphenylene sulfide resin composition, wherein the polyphenylene sulfide resin composition comprises (a) a polyphenylene sulfide resin and (b) a silicone-based polymer; the content of the component (b) is not less than 3 parts by weight and not more than 40 parts by weight with respect to 100 parts by weight of the component (a); in terms of morphology (phase structure), the polyphenylene sulfide resin composition has a phase-separated structure wherein the component (a) forms a continuous phase and the component (b) forms a dispersed phase in which the component (b) is dispersed with a number average dispersion diameter of not more than 3.0 μm; a test specimen obtained by injection molding of the polyphenylene sulfide resin composition at a cylinder temperature of 310°C and a mold temperature of 145°C has a flexural modulus of not more than 3.0 GPa as determined by a flexural test according to ISO 178; a test specimen of the polyphenylene sulfide resin composition having a thickness of not more than 1.6 mm is rated V-0 in terms of flame retardance according to the UL 94 standard.

EP 4 317 297 A1

## Description

### Technical Field

The present invention relates to a polyphenylene sulfide resin composition and a molded product formed by using the same.

### Background Art

Polyphenylene sulfide (hereinafter sometimes abbreviated as "PPS") resins are super engineering plastics with well-balanced properties such as heat resistance, chemical resistance, and flame retardance. In addition, the cost advantage of PPS resins over other super engineering plastics is the reason why PPS resins are the most commonly used resin materials after the five major engineering plastics in a wide variety of applications, including automotive, home appliance, and electric/electronic applications.

In automotive applications, especially in recent years, there has been a strong demand for actions that address the social challenges represented by the SDGs, such as reducing weight to save energy and replacing internal combustion engines with electric motors to reduce greenhouse gas emissions. PPS resins can meet this demand by substituting for metal materials to achieve weight reduction or by exhibiting high insulation property and heat resistance suitable for electric motors and thus are increasingly used in automotive applications year by year.

On the other hand, an inherent problem in expanding the applications of PPS resins is that these resins have lower toughness and are more brittle than other resins, as evidenced by the values of tensile elongation at break demonstrated in tensile tests.

Accordingly, a PPS resin composition containing an olefin elastomer as described in Patent Literature 1 has been developed and practically used in applications where toughness is essential. The combination of a PPS resin with the olefin elastomer, which is a more flexible material than the PPS resin, in this composition can provide both improved flexibility and toughness.

Patent Literature 2 discloses heat-shrinkable tubes made of a PPS resin composition in which the flexibility is achieved by a thermoplastic elastomer and a plasticizer added together with a PPS resin.

In addition, Patent Literature 3 and Patent Literature 4 describe methods of achieving flexibility by adding a silicone elastomer along with a PPS resin.

### Citation List

#### Patent Literature

Patent Literature 1: JP S61-21156 A
Patent Literature 2: JP 2013-6919 A
Patent Literature 3: JP 2017-222867 A
Patent Literature 4: JP 2017-214586 A

### Summary of Invention

#### Technical Problem

However, the inventors evaluated the flame retardance of the resin composition comprising a PPS resin and an olefin elastomer described in Patent Literature 1 and have found that the resin composition is much less flame retardant than the simple PPS resin. It is understood that the combination of an olefin elastomer, which is much less flame retardant, with a PPS resin reduces the flame retardance of the resulting composition, although the simple PPS resin is more flame retardant. This composition has advantages in terms of flexibility and toughness but does not exhibit the inherent excellent flame retardance of PPS resins, which is a problem that limits the application expansion of the composition.

Also, in the heat-shrinkable tubes made of a PPS resin composition described in Patent Literature 2, a thermoplastic elastomer and a plasticizer, which is a low molecular weight compound, are added to impart flexibility to the heat-shrinkable tubes, but the addition of these compounds reduces the flame retardance. Therefore, the heat-shrinkable tubes cannot achieve V-0 flame retardance according to the UL 94 standard.

In addition, the PPS resin compositions described in Patent Literature 3 have poor flexibility and also have low

tensile elongation at break and insufficient toughness, as described in the examples in Patent Literature 3, which means that there have been no PPS resin compositions that are both highly flame retardant and highly flexible and tough.

The PPS resin compositions described in Patent Literature 4 are shown to have high flexibility and tensile elongation at break, as described in the examples in Patent Literature 4, but excellent flame retardance is not achieved in these resin compositions in addition to the both characteristics.

Accordingly, an object of the present invention is to provide a polyphenylene sulfide resin composition which retains the inherent flame retardance of a PPS resin and is both flexible and tough.

Solution to Problem

The inventors have studied to solve the problems described above and have found that a polyphenylene sulfide resin composition comprising (a) a polyphenylene sulfide resin (hereinafter sometimes referred to as "component (a)") and (b) a silicone-based polymer (hereinafter sometimes referred to as "component (b)") according to a specific composition and containing substantially no inorganic fillers such as glass fibers has high flexibility, in which the component (b) is dispersed in a certain state and the flexural modulus is maintained at a certain value or below, and that a thin molded product made of the resin composition has properties including both flame retardance (V-0 rating (1.6 mmt (mm thick) or less) according to the UL 94 standard) and toughness. That is, the present invention is intended to solve at least some of the problems described above.

(1) A polyphenylene sulfide resin composition comprising (a) a polyphenylene sulfide resin and (b) a silicone-based polymer, wherein the content of the component (b) is not less than 3 parts by weight and not more than 40 parts by weight with respect to 100 parts by weight of the component (a); in terms of morphology (phase structure), the polyphenylene sulfide resin composition has a phase-separated structure wherein the component (a) forms a continuous phase and the component (b) forms a dispersed phase in which the component (b) is dispersed with a number average dispersion diameter of not more than 3.0 μm; a test specimen obtained by injection molding of the polyphenylene sulfide resin composition at a cylinder temperature of 310°C and a mold temperature of 145°C has a flexural modulus of not more than 3.0 GPa as determined by a flexural test according to ISO 178 (2010); a test specimen of the polyphenylene sulfide resin composition having a thickness of not more than 1.6 mm is rated V-0 in terms of flame retardance according to the UL 94 standard.

(2) The polyphenylene sulfide resin composition according to (1), wherein the polyphenylene sulfide resin composition comprises (c) an olefin elastomer in an amount of not less than 1 part by weight and not more than 40 parts by weight with respect to 100 parts by weight of the component (a).

(3) The polyphenylene sulfide resin composition according to (1) or (2), wherein a test specimen of the polyphenylene sulfide resin composition having a thickness of not more than 1.0 mm is rated V-0 in terms of flame retardance according to the UL 94 standard.

(4) The polyphenylene sulfide resin composition according to any one of (1) to (3), wherein the polyphenylene sulfide resin composition has a tensile elongation at break of not less than 10% measured by a tensile test according to ISO 527-1, -2 (2012).

(5) The polyphenylene sulfide resin composition according to any one of (1) to (4), wherein in terms of morphology (phase structure), the polyphenylene sulfide resin composition has a phase-separated structure wherein the component (a) forms a continuous phase and the component (b) forms a dispersed phase in which the component (b) is dispersed with a number average dispersion diameter of not more than 1.0 μm.

(6) The polyphenylene sulfide resin composition according to any one of (1) to (5), wherein the non-Newtonian index N of the component (a) in the polyphenylene sulfide resin composition is calculated to be not less than 1.30 by measuring the shear stress at a shear rate of 60-6080 $s^{-1}$ using a Capilograph at 300°C under the condition of orifice length L (mm) / orifice diameter D (mm) = 10, and fitting the relationship between the shear rate and the shear stress to the following formula (1):

$$SR = K \cdot SS^N \qquad (1)$$

(wherein N is a non-Newtonian index, and SR is a shear rate (1/sec), and SS is a shear stress (dyne/$cm^2$), and K is a coefficient).

(7) The polyphenylene sulfide resin composition according to any one of (1) to (6), wherein the melt viscosity of the polyphenylene sulfide resin composition measured at a shear rate of 122 $s^{-1}$ using a Capilograph at 300°C under the condition of orifice length L (mm) / orifice diameter D (mm) = 10 is not less than 400 Pa·s.

(8) The polyphenylene sulfide resin composition according to any one of (1) to (7), wherein the component (b) in

the polyphenylene sulfide resin composition is a silicone-based core-shell rubber.

(9) A molded product made of the polyphenylene sulfide resin composition according to any one of (1) to (8).

(10) The molded product according to (9) made of the polyphenylene sulfide resin composition, wherein the molded product has a hollow shape and is used for pipes. Advantageous Effects of Invention

The present invention can provide a polyphenylene sulfide resin composition having excellent flame retardance, flexibility, and toughness, and a molded product made of the polyphenylene sulfide resin composition.

Description of Embodiments

Embodiments of the present invention will be described in detail below.

(1) (a) Polyphenylene Sulfide Resin (Component (a))

A polyphenylene sulfide resin (a) used in the present invention comprises a polymer having repeating units of the following structural formula

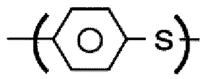

,

and the polymer containing repeating units of the above structural formula is preferably contained at not less than 70% by mole and more preferably at not less than 90% by mole from the viewpoint of heat resistance. In addition, the PPS resin component (a) may comprise repeating units having any of the following structures, wherein the repeating units account for less than about 30% by mole of all the repeating units of the PPS resin.

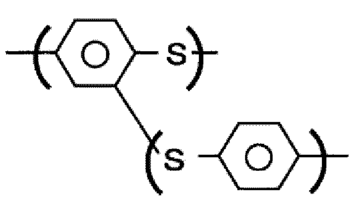

、

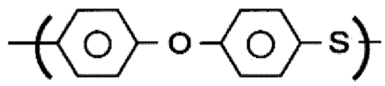

、

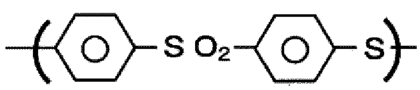

、

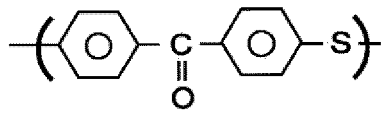

、

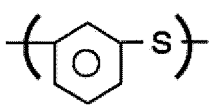

、

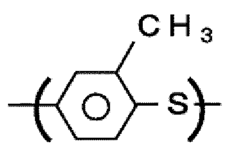

、

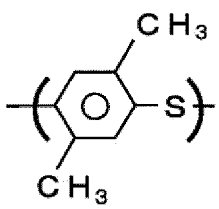

In PPS copolymers in which such a structure as described above constitutes some of the repeating units, the melting point is lower than the usual melting point of PPS polymers, 280°C. Therefore, such resin compositions are advantageous in terms of moldability and processability.

The number average molecular weight of the PPS resin used in the present invention is not specifically limited, but the number average molecular weight is preferably from 10,000 to 60,000, more preferably from 12,000 to 50,000, much more preferably from 14,000 to 40,000, and even more preferably from 16,000 to 35,000, so as to obtain more excellent mechanical properties. A number average molecular weight of not less than 10,000 is preferred because a PPS resin with a lower number average molecular weight has lower mechanical properties. On the other hand, a PPS resin with a number average molecular weight above 60,000 has a much higher melt viscosity, which is not preferred

for molding and processing.

The weight average molecular weight of the PPS resin component (a) in the present invention is preferably from 40,000 to 100,000, more preferably from 50,000 to 95,000, and much more preferably from 70,000 to 90,000. A weight average molecular weight of not less than 40,000 is preferred, because if the PPS resin has a lower weight average molecular weight, the melt viscosity of the resulting PPS resin composition is not considered high enough to increase the kneading strength during melt kneading, which results in a tendency for a silicone-based polymer (b) in the PPS resin composition to have a coarse number average dispersion diameter and reduces the toughness and flame retardance of the PPS resin composition. On the other hand, a PPS resin with a weight average molecular weight above 100,000 has an excessive melt viscosity, which is not preferred for molding and processing. In this respect, the number average dispersion diameter is determined by a method described in the Examples section.

In the present invention, the number average molecular weight and weight average molecular weight of the component (a) are values determined by using a gel permeation chromatography (GPC) system, manufactured by Senshu Scientific Co., Ltd., with respect to polystyrene.

The non-Newtonian index N of the PPS resin component (a) in the present invention is preferably not less than 1.30, more preferably not less than 1.35, much more preferably not less than 1.40, and particularly preferably not less than 1.50. When the non-Newtonian index of a PPS resin is less than 1.30, the PPS resin has a relatively low viscosity under low shear-rate flow conditions, which is not preferred because the low viscosity causes a reduction in moldability and processability and a reduction in flame retardance, as evidenced by dripping and surface renewal during a flame test. On the other hand, the upper limit of the non-Newtonian index is not specifically limited, but a PPS resin with a non-Newtonian index of greater than 5 has a highly branched and/or cross-linked structure and thus tends to have a significantly increased melt viscosity, which is not preferred for molding and processing. A process for producing a PPS resin having a non-Newtonian index of not less than 1.30 comprises using a polyhalogenated aromatic compound containing three or more halogen atoms in the molecule as a raw material for polymerization to allow the resulting polymer to have a branched structure, or subjecting a polymerized PPS resin to thermal oxidative crosslinking by heating in an oxygen atmosphere or by heating and adding a crosslinking agent such as a peroxide.

In the present invention, the non-Newtonian index is calculated by measuring the shear stress at a shear rate of 60-6080 $s^{-1}$ using a Capilograph at 300°C under the condition of orifice length L (mm) / orifice diameter D (mm) = 10 and fitting the relationship between the shear rate and the shear stress to the following formula (1):

$$SR = K \cdot SS^N \qquad (1)$$

(wherein N is a non-Newtonian index, and SR is a shear rate (1/sec), and SS is a shear stress (dyne/$cm^2$), and K is a coefficient).

The melt viscosity of the PPS resin component (a) in the present invention is preferably from 50 to 3,000 Pa·s, more preferably from 150 to 2,500 Pa·s, much more preferably from 300 to 2,000 Pa·s, particularly preferably from 500 to 1,500 Pa·s, and even more preferably from 800 to 1,200 Pa·s. The melt viscosity of the PPS resin is preferably not less than 50 Pa·s, because if the PPS resin has a lower melt viscosity, the melt viscosity of the resulting PPS resin composition is not considered high enough to increase the kneading strength during melt kneading, which results in a tendency for a silicone-based polymer (b) in the PPS resin composition to have a coarse number average dispersion diameter and reduces the toughness and flame retardance of the PPS resin composition. On the other hand, a PPS resin with a melt viscosity of greater than 3,000 Pa·s has an excessive melt viscosity, which is not preferred for molding and processing.

In the present invention, the melt viscosity of a PPS resin is a value measured at a shear rate of 122 $s^{-1}$ using a Capilograph at 300°C under the condition of orifice length L (mm) / orifice diameter D (mm) = 10.

A method of producing a PPS resin component (a) in the present invention is described below. However, the following method is not restrictive and any method is available as long as a PPS resin with the properties described above is provided.

First of all, details of a polyhalogenated aromatic compound, a sulfurizing agent, a polymerization solvent, a molecular weight modifier, a polymerization aid, and a polymerization stabilizer used in the production method are described.

[Polyhalogenated Aromatic Compound]

The polyhalogenated aromatic compound is a compound containing two or more halogen atoms in the molecule. Specific examples of the compound include polyhalogenated aromatic compounds, such as p-dichlorobenzene, m-dichlorobenzene, o-dichlorobenzene, 1,3,5-trichlorobenzene, 1,2,4-trichlorobenzene, 1,2,4,5-tetrachlorobenzene, hexachlorobenzene, 2,5-dichlorotoluene, 2,5-dichloro-p-xylene, 1,4-dibromobenzene, 1,4-diiodebenzene, and 1-methoxy-2,5-dichlorobenzene, and *p*-dichlorobenzene is preferred for use. In a preferred aspect, a carboxyl-containing dihalogenated aromatic compound such as 2,4-dichlorobenzoic acid, 2,5-dichlorobenzoic acid, 2,6-dichlorobenzoic acid, or 3,5-dichlorobenzoic acid, or a mixture thereof, is used as a copolymerization monomer for the purpose of introducing a carboxyl group. Additionally, two or more different polyhalogenated aromatic compounds may be combined to form a copolymer, but a p-dihalogenated aromatic compound is preferably used as the main component.

The amount of a polyhalogenated aromatic compound used may be, for example, from 0.9 to 2.0 moles, preferably from 0.95 to 1.5 moles, and more preferably from 1.005 to 1.2 moles, with respect to 1 mole of a sulfurizing agent, in order to obtain a PPS resin having a viscosity suitable for processing.

[Sulfurizing Agent]

Examples of the sulfurizing agent include an alkali metal sulfide, an alkali metal hydrosulfide, and hydrogen sulfide.

Specific examples of the alkali metal sulfide include lithium sulfide, sodium sulfide, potassium sulfide, rubidium sulfide, cesium sulfide, and mixtures of two or more of these sulfides, and sodium sulfide, among others, is preferred for use. These alkali metal sulfides can be used in the form of hydrates, aqueous mixtures, or anhydrides.

Specific examples of the alkali metal hydrosulfide include sodium hydrosulfide, potassium hydrosulfide, lithium hydrosulfide, rubidium hydrosulfide, cesium hydrosulfide, and mixtures of two or more of these hydrosulfides, and sodium hydrosulfide, among others, is preferred for use. These alkali metal hydrosulfides can be used in the form of hydrates, aqueous mixtures, or anhydrides.

In addition, an alkali metal sulfide prepared *in situ* from an alkali metal hydrosulfide and an alkali metal hydroxide in the reaction system can also be used. Additionally, an alkali metal sulfide can be prepared from an alkali metal hydrosulfide and an alkali metal hydroxide and transferred to a polymerization reactor and used.

Alternatively, an alkali metal sulfide prepared *in situ* from an alkali metal hydroxide, such as lithium hydroxide or sodium hydroxide, and hydrogen sulfide in the reaction system can also be used. Additionally, an alkali metal sulfide can be prepared from an alkali metal hydroxide, such as lithium hydroxide or sodium hydroxide, and hydrogen sulfide and transferred to a polymerization reactor and used.

If a portion of an added sulfurizing agent is lost due to dehydration or the like prior to the initiation of the polymerization reaction, the amount of sulfurizing agent added is the amount remaining after subtracting the loss of sulfurizing agent from the actual amount added.

It should be noted that a sulfurizing agent may be used in combination with an alkali metal hydroxide and/or an alkaline earth metal hydroxide. Specific preferred examples of the alkali metal hydroxide include sodium hydroxide, potassium hydroxide, lithium hydroxide, rubidium hydroxide, cesium hydroxide, and mixtures of two or more of these hydroxides, and specific examples of the alkaline earth metal hydroxide include calcium hydroxide, strontium hydroxide, and barium hydroxide, and sodium hydroxide, among others, is preferred for use.

When an alkali metal hydrosulfide is used as a sulfurizing agent, it is particularly preferred to use an alkali metal hydroxide at the same time as the alkali metal hydrosulfide. The amount of the alkali metal hydroxide used may be, for example, from 0.95 to 1.20 moles, preferably from 1.00 to 1.15 moles, and more preferably from 1.005 moles to 1.100 moles, with respect to 1 mole of the alkali metal hydrosulfide.

[Polymerization Solvent]

Preferably, an organic polar solvent is used as the polymerization solvent. Specific examples of the organic polar solvent include *N*-alkyl pyrrolidones, such as *N*-methyl-2-pyrrolidone and *N*-ethyl-2-pyrrolidone; caprolactams, such as *N*-methyl-ε-caprolactam; aprotic organic solvents, represented by 1,3-dimethyl-2-imidazolidinone, *N,N*-dimethylacetamide, *N,N*-dimethylformamide, hexamethylphosphoric triamide, dimethylsulfone, and tetramethylene sulfoxide; and mixtures thereof. These solvents are all highly stable under reaction conditions and are therefore preferred for use. In particular, *N*-methyl-2-pyrrolidone (hereinafter sometimes abbreviated as "NMP"), among those, is preferred for use.

The amount of an organic polar solvent used is selected from the range of 2.0 moles to 10 moles, preferably 2.25 moles to 6.0 moles, and more preferably 2.5 moles to 5.5 moles, with respect to 1 mole of a sulfurizing agent.

[Molecular Weight Modifier]

A monohalogenated compound (not necessarily an aromatic compound) may be used in combination with the polyhalogenated aromatic compound described above to form an end of the PPS resin produced or to modify the polymerization reaction or molecular weight.

[Polymerization Aid]

In a preferred aspect, a polymerization aid is used to produce a PPS resin with a relatively high degree of polymerization in a shorter period of time. In this context, the polymerization aid is a substance that increases the viscosity of the resulting PPS resin (a). Specific examples of such a polymerization aid include organic carboxylate salts, water, alkali metal chlorides, organic sulfonate salts, alkali metal sulfate salts, alkaline earth metal oxides, alkali metal phosphate salts, and alkaline earth metal phosphate salts. These polymerization aids may be used singly, or two or more of these polymerization aids may be used simultaneously. Among these polymerization aids, organic carboxylate salts, water, and alkali metal chlorides are preferred; furthermore, preferred organic carboxylate salts include alkali metal carboxylate salts and preferred alkali metal chlorides include lithium chloride.

The alkali metal carboxylate salts described above are compounds represented by the general formula $R(COOM)_n$ (wherein R is an aliphatic hydrocarbon group, an alicyclic hydrocarbon group optionally substituted with an aliphatic hydrocarbon group, or an aromatic hydrocarbon group optionally substituted with an aliphatic hydrocarbon group, and contains 1 to 20 carbon atoms and has a valence of n; M is an alkali metal selected from the group consisting of lithium, sodium, potassium, rubidium, and cesium; n is an integer of 1 to 3). The alkali metal carboxylate salts can also be used in the form of hydrates, anhydrides, or aqueous solutions. Specific examples of the alkali metal carboxylate salts include lithium acetate, sodium acetate, potassium acetate, sodium propionate, lithium valerate, sodium benzoate, sodium phenylacetate, potassium *p*-toluate, and mixtures thereof.

An alkali metal carboxylate salt may be formed by a reaction between approximately equimolar equivalents of an organic acid and one or more compounds selected from the group consisting of alkali metal hydroxides, alkali metal carbonate salts, and alkali metal bicarbonate salts which are added to the reaction system. Among the alkali metal carboxylate salts described above, lithium salts are highly soluble in the reaction system and have a high aiding effect, but are expensive, and potassium, rubidium, and cesium salts are considered to be less soluble in the reaction system. Therefore, sodium acetate, which is inexpensive and moderately soluble in the polymerization system, is most preferred for use.

When one of the alkali metal carboxylate salts is used as a polymerization aid, the amount of the alkali metal carboxylate salt used is typically from 0.01 mole to 2 moles, and preferably from 0.1 mole to 0.6 mole, more preferably from 0.2 mole to 0.5 mole, with respect to 1 mole of added alkali metal sulfide to achieve a higher degree of polymerization.

When water is used as a polymerization aid, the amount of water added is typically from 0.3 mole to 15 moles, and preferably from 0.6 mole to 10 moles, more preferably from 1 mole to 5 moles, with respect to 1 mole of added alkali metal sulfide to achieve a higher degree of polymerization.

It is certainly possible to use two or more of these polymerization aids in combination. For example, when an alkali metal carboxylate salt and water are used in combination, the amounts of the polymerization aids required to increase the molecular weight of the resulting PPS resin may be less than when either of the polymerization aids is used alone.

The addition of the polymerization aids is not limited to a specific time, and these polymerization aids may be added during the preliminary process described below, at the initiation of polymerization, or at any time during the polymerization, or may be added in portions. However, when an alkali metal carboxylate salt is used as a polymerization aid, it is more preferred that the alkali metal carboxylate salt be added at the beginning of the preliminary process or at the start of the polymerization because of the ease of addition at that time. When water is used as a polymerization aid, it is effective to add water during the polymerization reaction after adding a polyhalogenated aromatic compound.

[Polymerization Stabilizer]

A polymerization stabilizer can be used to stabilize the polymerization reaction system and prevent side reactions. The polymerization stabilizer helps stabilize the polymerization reaction system and prevent unwanted side reactions. One indication of side reactions is the formation of thiophenol, and thiophenol formation can be prevented by adding a polymerization stabilizer to a polymerization reaction system. Specific examples of the polymerization stabilizer include compounds such as alkali metal hydroxides, alkali metal carbonate salts, alkaline earth metal hydroxides, and alkaline earth metal carbonate salts. Among these compounds, alkali metal hydroxides such as sodium hydroxide, potassium hydroxide, and lithium hydroxide are preferred. Alkali metal carboxylate salts as described above also act as polymerization stabilizers. As mentioned above, it is particularly preferred to use an alkali metal hydroxide at the same time as an alkali metal hydrosulfide in cases where the alkali metal hydrosulfide is used as a sulfurizing agent. In this case, an excess amount of the alkali metal hydroxide over the sulfurizing agent can also act as a polymerization stabilizer.

These polymerization stabilizers may be used singly, or two or more of these polymerization stabilizers may be used in combination. Each polymerization stabilizer is typically used in a ratio of 0.02 to 0.2 mole, preferably 0.03 to 0.1 mole, more preferably 0.04 to 0.09 mole, to 1 mole of added alkali metal sulfide. The stabilizing effect of the polymerization stabilizer is insufficient when the ratio of the polymerization stabilizer to the alkali metal sulfide is smaller. On

the other hand, any excess amount of the polymerization stabilizer tends to cause economic disadvantages and a reduction in polymer yield.

The addition of the polymerization stabilizers is not limited to a specific time, and these polymerization stabilizers may be added during the preliminary process described below, at the initiation of polymerization, or at any time during the polymerization, or may be added in portions. However, it more preferred that a polymerization stabilizer be added at the beginning of the preliminary process or at the start of the polymerization because of the ease of addition at that time.

A preferred method of producing a PPS resin used in the present invention is then described step by step in the following order: preliminary process, polymerization reaction process, recovery process, and post-treatment process. However, it should be understood that the production of a PPS resin is not limited to the method.

[Preliminary Process]

In the method of producing a PPS resin, a mixture of an organic polar solvent and a sulfurizing agent is preferably heated prior to adding a polyhalogenated aromatic compound to the reaction system to remove any excess amount of water from the system, although a sulfurizing agent is typically used in the form of a hydrate.

In addition, a sulfurizing agent prepared *in situ* from an alkali metal hydrosulfide and an alkali metal hydroxide in the reaction system or in a vessel other than a polymerization reactor may also be used as the sulfurizing agent, as described above. No specific limitations are imposed on the method; however, in a preferred method, an alkali metal hydrosulfide and an alkali metal hydroxide are added to an organic polar solvent at a temperature of from normal temperatures to 150°C, preferably a temperature of from normal temperatures to 100°C, under an inert gas atmosphere, and the resulting mixture is heated to at least 150°C or higher, preferably a temperature of from 180 to 260°C, under normal or reduced pressure to remove water by evaporation. A polymerization aid may be added at this step. In addition, toluene or the like may be added to the reaction to promote evaporation of water.

In the polymerization reaction, the amount of water in the polymerization system is preferably from 0.3 mole to 10.0 moles with respect to 1 mole of an added sulfurizing agent. In this context, the amount of water in the polymerization system is the amount remaining after subtracting the amount of water removed from the polymerization system from the amount of water added to the polymerization system. In addition, the water added may be in the form of water, an aqueous solution, or crystallization water, for example.

[Polymerization Reaction Process]

The reaction between the sulfurizing agent and the polyhalogenated aromatic compound is allowed to proceed in the organic polar solvent at a temperature of not less than 200°C but less than 290°C to produce a PPS resin.

Preferably, the organic polar solvent, the sulfurizing agent, and the polyhalogenated aromatic compound are mixed together at a temperature of from normal temperatures to 240°C, preferably a temperature of from 100°C to 230°C, under an inert gas atmosphere at the start of the polymerization reaction process. A polymerization aid may be added at this step. These raw materials can be added to the reaction system randomly or simultaneously.

The resulting mixture is typically heated to a temperature of not less than 200°C but less than 290°C. The heating is not limited to a specific temperature rise rate, but the temperature rise rate is typically selected from the range of 0.01 to 5°C/min and more preferably from the range of 0.1 to 3°C/min.

Generally, the mixture is finally heated to a temperature of not less than 250°C but less than 290°C, and the temperature is typically maintained for 0.25 to 50 hours, preferably 0.5 to 20 hours, to allow the reaction to proceed.

A method in which the reaction is allowed to proceed at a temperature of, for example, 200°C to 260°C for a certain time in a step prior to heating the mixture to a final temperature and then raising the temperature to a temperature of not less than 270°C but less than 290°C is effective in achieving a higher degree of polymerization. In this case, the reaction time is typically selected from the range of 0.25 hour to 20 hours and preferably from the range of 0.25 hour to 10 hours at a temperature of 200°C to 260°C.

It should be noted that performing the polymerization in multiple stages may be effective in producing a polymer with a higher degree of polymerization. In cases where the polymerization is carried out in multiple stages, the effective time is when the conversion of the polyhalogenated aromatic compound in the system has reached 40% by mole or more, preferably 60% by mole, at 245°C.

In this context, the polyhalogenated aromatic compound (hereinafter abbreviated as "PHA") conversion is a value calculated by one of the following formulas. The residual amount of PHA can typically be measured by gas chromatography.

(A) Cases where the polyhalogenated aromatic compound added is in molar excess relative to the alkali metal sulfide

$$\text{Conversion} = [\text{Amount of added PHA (moles)} - \text{Residual amount of PHA (moles)}] / [\text{Amount of added PHA (moles)} - \text{Excess amount of PHA (moles)}].$$

(B) Other cases than (A)

$$\text{Conversion} = [\text{Amount of added PHA (moles)} - \text{Residual amount of PHA (moles)}] / [\text{Amount of added PHA (moles)}].$$

[Recovery Process]

In the method of producing a PPS resin, solids are recovered from the polymerization reaction system comprising the polymer, the solvent, and the like after the polymerization is completed. As for the recovery method, it is essential to adopt a method that includes slow cooling of the polymerization reaction to recover the resulting particulate polymer after the polymerization reaction is completed. The slow cooling is not limited to a specific temperature drop rate, but the temperature drop rate is typically from about 0.1 °C/min to 3 °C/min. The polymerization reaction need not be slowly cooled at the constant temperature drop rate throughout the entire slow cooling process. For example, a method in which the polymerization reaction is slowly cooled at a rate of 0.1 to 1°C/min until polymer particles are crystallized and precipitated, and then is cooled at a rate of 1°C/min or more can be adopted.

[Post-Treatment Process]

After a PPS resin is produced by the polymerization and recovery process described above, the PPS resin may be subjected to acid treatment, hot water treatment, washing with an organic solvent, and/or treatment with an alkali metal or alkaline earth metal.

Acid treatment is performed as follows. An acid used for acid treatment of the PPS resin is not specifically limited as long as the PPS resin is not decomposed by the acid. Examples of the acid include acetic acid, hydrochloric acid, sulfuric acid, phosphoric acid, silicic acid, carbonic acid, and propylic acid. Among these acids, acetic acid and hydrochloric acid are more preferred for use, and acids that decompose a PPS resin, such as nitric acid, are not preferred.

Examples of acid treatment methods include a method in which a PPS resin is immersed in an acid or an acid solution in water, in which the acid or the acid solution in water can be stirred or heated as needed. For example, when acetic acid is used, an aqueous solution of acetic acid at pH 4 is heated to a temperature of 80 to 200°C, and the PPS resin powder is immersed in the aqueous solution while stirring for 30 minutes to obtain a sufficient effect of the acetic acid. After the treatment, the solution may have a pH of 4 or higher, for example, a pH of about 4 to 8. The PPS resin that has been treated with an acid is preferably washed several times with water or warm water to remove any residual acid or salt. The water used for washing is preferably distilled or deionized water so as not to interfere with the effect of the acid treatment on the preferred chemical modification of the PPS resin.

Hot water treatment is performed as follows. When a PPS resin is treated with hot water, the temperature of the hot water is preferably 100°C or higher, more preferably 120°C or higher, even more preferably 150°C or higher, and particularly preferably 170°C or higher. The effect of hot water treatment below 100°C on the preferred chemical modification of the PPS resin is small, which is not preferred.

The water used for the hot water treatment is preferably distilled or deionized water so as to achieve the effect of the hot water washing on the preferred chemical modification of the PPS resin. The hot water treatment is not limited to a specific operation, but is carried out, for example, by a method in which a solution prepared by adding a predetermined amount of a PPS resin to a predetermined volume of water is heated and stirred in a pressurized vessel, or by a method in which a PPS resin is continuously treated with hot water. With respect to the liquor ratio of a PPS resin to water, it is preferred that water be more than a PPS resin, and it is typical that the amount of a PPS resin is selected to be not more than 200 g relative to 1 liter of water.

In addition, to avoid unpreferable decomposition of terminal groups, an inert gas atmosphere is preferred as the atmosphere under which the treatment is performed. Furthermore, the PPS resin that has undergone the hot water treatment is preferably washed several times with warm water to remove any residual components.

Washing with an organic solvent is performed as follows. The washing of a PPS resin is not limited to a specific organic solvent, provided that the organic solvent does not have an adverse effect, such as a decomposition effect, on the PPS resin. Examples of the organic solvent include nitrogen-containing polar solvents, such as N-methyl-2-pyrrolidone, dimethylformamide, dimethylacetamide, 1,3-dimethylimidazolidinone, hexamethylphosphorous amide, and piperazinones; sulfoxide-sulfone solvents, such as dimethyl sulfoxide, dimethylsulfone, and sulfolane; ketone solvents, such as acetone, methyl ethyl ketone, diethyl ketone, and acetophenone; ether solvents, such as dimethyl ether, dipropyl ether, dioxane, and tetrahydrofuran; halogen solvents, such as chloroform, methylene chloride, trichloroethylene, ethylene dichloride, perchloroethylene, monochloroethane, dichloroethane, tetrachloroethane, perchloroethane, and chlorobenzene; alcohol-phenol solvents, such as methanol, ethanol, propanol, butanol, pentanol, ethylene glycol, propylene glycol, phenol, cresol, polyethylene glycol, and polypropylene glycol; and aromatic hydrocarbon solvents, such as benzene, toluene, and xylene. Among these organic solvents, N-methyl-2-pyrrolidone, acetone, dimethylformamide and chloroform are particularly preferred for use. In addition, these organic solvents are used singly, or two or more of these organic solvents are used in combination.

Examples of organic solvent washing methods include a method in which a PPS resin is immersed in an organic solvent, in which the organic solvent can be stirred or heated as needed. When a PPS resin is washed with an organic solvent, the washing is not limited to a specific temperature, and an arbitrary temperature from normal temperatures up to about 300°C can be selected. Although higher wash temperatures tend to result in higher washing efficiency, sufficient effectiveness is usually achieved at a wash temperature ranging from normal temperatures to 150°C. The PPS resin can be washed at a temperature equal to or above the boiling point of an organic solvent under pressure in a pressurized vessel. In addition, the washing is not limited to a specific length of time. The washing time depends on the washing conditions, and sufficient effectiveness is usually achieved by washing for 5 minutes or longer in batch washing. Additionally, the PPS resin can be washed continuously.

Methods of treatment with alkali metal or alkaline earth metal include, for example, a method in which an alkali metal or alkaline earth metal salt is added before, during, or after the preliminary process described above, a method in which an alkali metal or alkaline earth metal salt is added to a polymerization pot before, during, or after the polymerization process, or a method in which an alkali metal or alkaline earth metal salt is added at the beginning, middle, or end of the washing process described above. The simplest of these methods is to add an alkali metal or alkaline earth metal salt after removing any residual oligomer or salt by washing with an organic solvent, warm water, or hot water. Preferably, an alkali metal or alkaline earth metal is introduced into a PPS in the form of an alkali metal or alkaline earth metal ion from an acetate salt, hydroxide, carbonate salt, or the like. In addition, any excess amount of an alkali metal or alkaline earth metal salt is preferably removed by washing with warm water. When an alkali metal or alkaline earth metal is introduced as described above, the concentration of an alkali metal or alkaline earth metal ion is preferably not less than 0.001 mmol and more preferably not less than 0.01 mmol relative to 1 g of a PPS, and the temperature is preferably 50°C or higher, more preferably 75°C or higher, and particularly preferably 90°C or higher. The upper limit of the temperature is not specifically limited, but a temperature of280°C or lower is typically preferred from an operational standpoint. The liquor ratio (the weight ratio of a washing solution to a dry PPS) is preferably not less than 0.5, more preferably not less than 3, and even more preferably not less than 5.

In the present invention, the treatment is preferably carried out with an acid or with an alkali metal or alkaline earth metal salt, more preferably with an alkali metal or alkaline earth metal salt, after removing any residual oligomer or salt by washing with an organic solvent and warm water at approximately 80°C, or by repeating the hot water washing described above several times from the viewpoint of obtaining a polyphenylene sulfide resin composition having a high retention stability.

Moreover, after polymerization of a PPS resin, the PPS resin can be subjected to thermal oxidative crosslinking by heating in an oxygen atmosphere or by heating and adding a crosslinking agent such as a peroxide to increase the molecular weight and be used.

When dry heat treatment is performed to increase the molecular weight by thermal oxidative crosslinking, the treatment temperature is preferably from 160°C to 260°C and more preferably from 170°C to 250°C. In addition, the oxygen concentration is preferably not less than 5% by volume and more preferably not less than 8% by volume. Although not specifically limited, the upper limit of the oxygen concentration is approximately 50% by volume. The treatment time is preferably from 0.5 hour to 100 hours, more preferably from 1 hour to 50 hours, and even more preferably from 2 hours to 25 hours. A heat treatment device can be a typical hot air dryer or a rotary or fan heater, although the use of a rotary or fan heater is more preferred for efficient and more homogeneous treatment.

In addition, the dry heat treatment can also be carried out to reduce the thermal oxidative crosslinking and to remove the volatile components. The treatment temperature is preferably from 130°C to 250°C and more preferably from 160°C to 250°C. In addition, the oxygen concentration in this case is preferably less than 5% by volume and more preferably less than 2% by volume. The treatment time is preferably from 0.5 hour to 50 hours, more preferably from 1 hour to 20 hours, and even more preferably from 1 hours to 10 hours. A heat treatment device can be a typical hot air dryer or a rotary or fan heater, although the use of a rotary or fan heater is more preferred for efficient and more homogeneous treatment.

A PPS resin component (a) in the present invention may have a functional group such as a carboxyl or amino group introduced at an end or side chains of the PPS resin from the viewpoint of increasing the reactivity with (c) an olefin elastomer or other additives. In an aspect, the amount of the functional group is preferably from 25 to 400 μmol/g,

more preferably from 25 to 250 μmol/g, much more preferably from 30 to 150 μmol/g, and even more preferably from 30 to 80 μmol/g. Preferably, reactivity with (c) an olefin elastomer and other additives is provided by an amount of the functional group of not less than 25 μmol/g. On the other hand, a reduction in processability, flame retardance, and chemical resistance due to an increase in volatile components can preferably be prevented by an amount of the functional group in the PPS resin of not more than 400 μmol/g.

Examples of methods of introducing a functional group such as a carboxyl or amino group into a PPS resin include a method comprising copolymerizing a polyhalogenated aromatic compound and a sulfurizing agent, either or both of which comprise a carboxyl or amino group, and a method in which a compound comprising a carboxyl or amino group, such as maleic anhydride or sorbic acid, is added and melt-kneaded together with a PPS resin to allow the reaction for introducing the functional group to proceed. A preferred type of functional group is carboxyl or amino.

In addition, a combination of several PPS resins that differ in melt viscosity, non-Newtonian index, and amount of functional group can be used for the present invention.

(2) (c) Olefin Elastomer

Addition of (c) an olefin elastomer to a polyphenylene sulfide resin composition of the present invention is preferable from the viewpoint of achieving high flexibility and toughness in the resin composition. In addition, the dispersibility of a silicone-based polymer (b) is increased by the effect of the olefin elastomer to increase the melt viscosity of the resin composition, resulting in higher toughness and flame retardance. Moreover, an olefin elastomer is selected also from the viewpoint of cost advantages over other flexible materials.

Examples of the olefin elastomer (c) include ethylene-butene copolymers, ethylene-propylene copolymers, ethylene-hexene copolymers, ethylene-octene copolymers, ethylene-vinyl acetate copolymers, ethylene-methyl acrylate copolymers, ethylene-ethyl acrylate copolymers, ethylene-glycidyl methacrylate copolymers, ethylene-butyl acrylate copolymers, ethylene-methyl acrylate copolymers, ethylene-styrene copolymers, ethylene-methyl acrylate-glycidyl methacrylate copolymers, ethylene-ethyl acrylate-glycidyl methacrylate copolymers, and ethylene-vinyl acetate-glycidyl methacrylate copolymers; among these, ethylene-butene copolymers, ethylene-propylene copolymers, ethylene-glycidyl methacrylate copolymers, ethylene-methyl acrylate-glycidyl methacrylate copolymers, ethylene-ethyl acrylate-glycidyl methacrylate copolymers, and ethylene-vinyl acetate-glycidyl methacrylate copolymers are preferred from the viewpoint of compatibility and dispersibility in PPS resins. In particular, olefin elastomers comprising a glycidyl group are preferred; among these, ethylene-glycidyl methacrylate copolymers and ethylene-methyl acrylate-glycidyl methacrylate copolymers are preferred.

A preferred aspect of the olefin elastomer (c) used in the present invention with respect to intermolecular bonding with a PPS resin is the presence of a reactive functional group.

The reactive functional group owned by the olefin elastomer (c) is not specifically limited, and specific examples of the reactive functional group include vinyl group, epoxy group, carboxyl group, acid anhydride group, ester group, aldehyde group, carbonyldioxy group, haloformyl group, alkoxycarbonyl group, amino group, hydroxyl group, styryl group, methacryl group, acryl group, ureido group, mercapto group, sulfide group, isocyanate group, hydrolyzable silyl group, and oxazoline group. Among these groups, hydroxyl group, epoxy group, carboxyl group, amino group, acid anhydride group, amino group, hydroxyl group, isocyanate group, and oxazoline group are preferred, and the olefin elastomer (c) may comprise two or more of the reactive functional groups.

Examples of methods of introducing a reactive functional group into an olefin elastomer (c) include a method comprising combining an olefin elastomer with a compound or resin that is compatible with the olefin elastomer and comprises the functional group described above, a method in which a polymerizable monomer comprising the functional group described above or a functional group convertible to the functional group described above is incorporated into an olefin elastomer by copolymerization at the main chain, side chains, or an end when the olefin elastomer is polymerized, a method in which an initiator comprising the functional group described above or a functional group convertible to the functional group described above is used for the polymerization of an olefin elastomer, a method in which an olefin elastomer is reacted with a polymerizable monomer comprising the functional group described above or a functional group convertible to the functional group described above in the presence of a radical initiator, and a method comprising modifying an olefin elastomer by a technique such as oxidation or thermal decomposition. Among these methods, the methods in which a polymerizable monomer comprising the functional group described above or a functional group convertible to the functional group described above is incorporated into an olefin elastomer by copolymerization at the main chain, side chains, or an end when the olefin elastomer is polymerized and in which an olefin elastomer is reacted with a polymerizable monomer comprising the functional group described above or a functional group convertible to the functional group described above in the presence of a radical initiator are preferred from the viewpoint of product quality, cost, and feed control.

The polymerizable monomer comprising the functional group described above is not specifically limited, and examples of the polymerizable monomer include acrylic acid, methacrylic acid, maleic acid, itaconic acid, citraconic acid,

crotonic acid, nadic acid, anhydrides of these acids, glycidyl acrylate, glycidyl methacrylate, glycidyl ethylacrylate, glycidyl itaconate, vinyl acetate, vinyl propionate, vinyl trimethoxy silane, vinyl triethoxy silane, and γ-methacryloxypropyl trimethoxy silane.

The amount of the functional group in an olefin elastomer (c) with respect the weight of the olefin elastomer is preferably not less than 0.01% by weight, more preferably not less than 0.1% by weight, and even more preferably not less than 1% by weight, to allow the reaction with (a) a PPS resin to proceed sufficiently. Increased reactivity of the olefin elastomer with a PPS resin provides higher compatibility, which can be expected to result in fine dispersion of the olefin elastomer in the PPS resin and consequent improvement in, for example, impact properties and toughness can be expected. The upper limit of the amount of the functional group is not specifically limited as long as the inherent properties of the olefin elastomer are not compromised; the amount of the functional group is preferably not more than 40% by weight and more preferably not more than 30% by weight, in view of the reduction in flowability.

In an embodiment of the present invention, the amount of the added olefin elastomer (c) is preferably not less than 1 part by weight and not more than 40 parts by weight, more preferably not less than 3 parts by weight and not more than 35 parts by weight, much more preferably not less than 5 parts by weight and not more than 30 parts by weight, even more preferably not less than 5 parts by weight and not more than 25 parts by weight, and particularly preferably not less than 5 parts by weight and not more than 15 parts by weight, with respect to 100 parts by weight of a PPS resin component (a). In cases where the amount of the olefin elastomer is more than 40 parts by weight with respect to 100 parts by weight of the PPS resin, the olefin elastomer is coarsely dispersed in the PPS resin, resulting in a tendency to low toughness and also a tendency to low flame retardance. On the other hand, in cases where the amount of the olefin elastomer is less than 1 part by weight with respect to 100 parts by weight of the PPS resin, the effect of the olefin elastomer in improving the flexibility and toughness of a resin composition is undesirably small.

In addition, a combination of two or more olefin elastomers is preferably used to increase dispersibility.

In the phase structure of a polyphenylene sulfide resin composition of the present invention, a PPS resin forms a continuous phase, and an olefin elastomer (c) preferably forms a dispersed phase in which the olefin elastomer is dispersed with a number average dispersion diameter of not more than 1.0 μm, more preferably not more than 0.5 μm, and particularly preferably not more than 0.3 μm, when the olefin elastomer (c) is added to the PPS resin composition, from the viewpoint of minimizing the reduction of flame retardance due to the addition of the olefin elastomer (c) and achieving excellent effects in improving flexibility and toughness. The lower limit of the number average dispersion diameter may be about 1 nm, which is the minimum dispersion diameter of a substantially incompatible system, although a smaller dispersion diameter is more preferred. The olefin elastomer (c) preferably comprises, for example, a reactive functional group in order to form a dispersed phase in which the olefin elastomer (c) is dispersed with a number average dispersion diameter of not more than 1.0 μm.

The number average dispersion diameter of the olefin elastomer (c) is determined as follows: a test specimen according to ISO 527-1-1A is formed at a molding temperature equal to the peak melting point of the PPS resin component (a) + (20 to 40°C); a thin section of not more than 0.1 μm in thickness is prepared from the core of the test specimen by cutting the dumbbell-shaped test specimen at room temperature in the cross-sectional direction perpendicular to the resin flow in the molding of the test specimen; the thin section is observed with an SU8220 field emission scanning electron microscope manufactured by Hitachi High-Technologies Corporation at a magnification of 1,000 to 5,000 times to measure the major and minor diameters of each of any 100 olefin elastomer particles; the average of the major and minor diameters is calculated as the dispersion diameter of each dispersed particle; finally, the dispersion diameters are averaged to calculate the number average dispersion diameter.

(3) (b) Silicone-Based Polymer (Component (b))

The presence of a silicone-based polymer (b) in a PPS resin composition according to the embodiment of the present invention is essential for achieving both high flexibility and toughness in the resin composition and for imparting flame retardance to the resin composition.

The silicone-based polymer (b) is a high-molecular-weight compound containing siloxane bonds in the main chain structure, and specific examples of the silicone-based polymer (b) include silicone gums, silicone elastomers, silicone resins, organopolysiloxane-containing copolymers, and organopolysiloxane-containing complexes. In this context, the high-molecular-weight compound is an organopolysiloxane compound having a degree of polymerization of not less than 100 and a weight average molecular weight of about 10,000 or more.

Silicone gums, silicone elastomers, and silicone resins are all high-molecular-weight silicones that contain an organopolysiloxane in the backbone, and high-molecular-weight silicones are classified according to the density of the three-dimensional network: silicones with no three-dimensional network structure are called silicone gums, and silicones with a light three-dimensional network structure are called silicone elastomers, and silicones with a dense three-dimensional network structure are called silicone resins. Organopolysiloxane-containing copolymers are copolymers comprising an organopolysiloxane component and one or more copolymerizing components selected, for example, from polyolefins (polyethylene, polypropylene, polybutylene, and the like), polycarbonates, polyamides, poly(butylene terephthalate), polyester elastomers, polystyrenes, polyetherimides, polyketones, liquid crystalline polymers, polyetherketones, polyetheretherketones, and polyacrylates (poly(methyl methacrylate), and the like). More preferred copolymerizing components are polyolefins, polycarbonates, polyetherimides, and polyacrylates. Organopolysiloxane-containing complexes can be core-shell rubbers of silicone elastomer particles coated with an acrylic component (silicone-acrylic core-shell rubbers) or composite powders of a silicone elastomer coated with a silicone resin.

The silicone gums, silicone elastomers, silicone resins, organopolysiloxane-containing copolymers, organopolysiloxane-containing core-shell compounds, and organopolysiloxane-containing complexes preferably have an organopolysiloxane structure containing one or more hydrocarbon groups selected from alkyl groups (methyl, ethyl, propyl, butyl, 2-ethylbutyl, octyl, and the like), cycloalkyl groups (cyclohexyl, cyclopentyl, and the like), alkenyl groups (vinyl, propenyl, butenyl, heptenyl, hexenyl, allyl, and the like), and aryl groups (phenyl, tollyl, xylyl, naphthyl, diphenyl, and the like), and more preferably contain a methyl or phenyl group, among these groups.

In addition, the organopolysiloxane structure preferably contains one or more functional groups selected from alkoxyl groups (methoxy, ethoxy, propoxy, butoxy, and the like), amino group, epoxy group, carbinol group, methacryl group, ether group, mercapto group, carboxyl group, phenol group, silanol group, acryl group, carboxylic anhydride group, polyether group, aralkyl group, fluoroalkyl group, long-chain alkyl group, higher fatty acid ester group, higher fatty acid amide group, and the like from the viewpoint of increasing the compatibility with the PPS resin or olefin elastomer at an end of the molecular chain or side chains of the molecular chain, and preferably contains an alkoxyl, amino, epoxy, methacryl, mercapto, carboxyl, and/or acryl group(s), among these groups, and particularly preferably contains an alkoxyl, epoxy, and/or methacryl group(s).

The form of the silicone-based polymer is not limited, but may be, for example, in the form of pellets, bulk, powder, powder agglomerates, flakes, liquid, or gums. The silicone-based polymer is preferably in the form of pellets, powder, powder agglomerates, or flakes with respect to handling properties, processability, and dispersibility.

Among these silicone-based polymers (b), silicone-based polymers having a three-dimensional network structure, that is, silicone elastomers and silicone resins, are preferred because of their high flexibility and excellent flame retardance and high dispersibility in a resin composition, and silicone elastomers are particularly preferred because of their balance between flexibility and flame retardance. Among these silicone-based polymers, silicone-based core-shell rubbers are preferred, and silicone-acrylic core-shell rubbers are particularly preferred.

The silicone-based polymer (b) preferably has an average primary particle diameter of not more than 3.0 μm, more preferably not more than 2.0 μm, even more preferably not more than 1.0 μm, and particularly preferably not more than 0.5 μm from the viewpoint of dispersibility, flame retardance, and toughness of a PPS resin composition. The average primary particle diameter (number average particle diameter) of the silicone-based polymer (b) can be determined by randomly selecting 100 particles from a scanning electron micrograph to measure the diameters of the particles and calculating the arithmetic mean of the measured diameters. In cases where the shapes of the particles in the micrograph are not really circular, that is, the shapes of the particles are elliptical, the major diameter of a particle is considered to be the diameter of the particle.

In cases where a silicone-based polymer (b) having an average primary particle diameter of not more than 3.0 μm is used, a dispersed phase in which the component (b) is dispersed with a number average dispersion diameter of not more than 3.0 μm can be formed in the phase structure of a PPS resin composition, for example, by using an olefin elastomer (c) in combination with the silicone-based polymer (b) or by using a PPS resin having a high melt viscosity to increase the melt viscosity of the PPS resin composition, resulting in higher toughness and flame retardance. In addition, preferred conditions for melt kneading in a twin screw extruder may be conditions including an LID ratio of not less than 20, a number of kneading blocks of two or more, and a screw rotation speed of 200 to 500 rpm, because under these conditions, particles of the component (b) having the desired number average dispersion diameter can be obtained. A combination of these methods is particularly preferred.

On the other hand, even if a silicone-based polymer (b) having an average primary particle diameter of not more than 3.0 μm is used, the component (b) is aggregated and therefore rarely has the desired number average dispersion diameter, which may result in lower toughness and flame retardance if the resulting resin composition has a low melt viscosity or the kneading strength during melt kneading is insufficient. In cases where the component (b) described above forms agglomerates in the morphology (phase structure) of a PPS resin composition of the present invention, each of the agglomerates is counted as a single dispersed phase.

The amount of the silicone-based polymer (b) used in the present invention and added with respect to 100 parts by weight of a PPS resin component (a) is essentially not less than 3 parts by weight and not more than 40 parts by weight, preferably not less than 5 parts by weight and not more than 37 parts by weight, more preferably not less than 7.5 parts by weight and not more than 35 parts by weight, even more preferably not less than 8 parts by weight and not more than 30 parts by weight, and particularly preferably not less than 9 parts by weight and not more than 25 parts by weight. In cases where the amount of the silicone-based polymer is more than 40 parts by weight with respect to 100 parts by weight of the PPS resin, the silicone-based polymer is coarsely dispersed in the PPS resin, resulting in

a tendency to low toughness and low flame retardance. On the other hand, in cases where the amount of the silicone-based polymer is less than 3 parts by weight with respect to 100 parts by weight of the PPS resin, sufficient flexibility and toughness and high flame retardance are undesirably not achieved in a resin composition.

In addition, a combination of two or more silicone-based polymers is preferably used to provide a balance of flexibility, toughness, and flame retardance and to increase dispersibility.

(4) (d) Other Additives

Furthermore, a PPS resin composition according to the embodiment of the present invention may additionally comprise a resin other than the component (a), the component (b), and the olefin elastomer (c), provided that the resin does not impair the effect of the present invention. Specific examples of the resin include, but are not limited to, polyamides, polyamide elastomers, poly(butylene terephthalate), polyethylene terephthalate), polyester elastomers, polyetherimides, polyketones, liquid crystalline polymers, polyetherketones, polyetheretherketones, ethylene-tetrafluoroethylene copolymers (ETFE), tetrafluoroethylene-perfluoro(alkylvinylether) copolymers (PFA), tetrafluoroethylene-hexafluoropropylene copolymers (FEP), ethylene-tetrafluoroethylene-hexafluoropropylene copolymers, polyvinylidene fluoride (PVDF), polychlorotrifluoroethylene (PCTFE), and styrene system elastomers. The amount of the resin added is preferably less than 20 parts by weight, more preferably less than 15 parts by weight, and even more preferably less than 10 parts by weight, with respect to 100 parts by weight of the PPS resin. The lower limit of the amount of the resin is preferably 0 parts by weight, that is, the PPS resin composition does not contain any of these resins.

The amount of the other resin added is preferably in the range described above, because the addition of the other resin is expected to cause the formation of a phase-separated structure with the PPS resin, resulting in reduced adhesion with reduced toughness.

A phosphorus-based flame retardant, a halogen-based flame retardant, or an inorganic flame retardant may be added to a PPS resin composition according to the embodiment of the present invention to improve flame retardance. Examples of the phosphorus-based flame retardant include phosphorus-containing flame retardants, such as aromatic phosphate compounds, phosphazene compounds, phosphaphenanthrene compounds, metal phosphinates, phosphonic polymers, ammonium polyphosphate, melamine polyphosphate, phosphate amides, and red phosphorus. Examples of the halogen-based flame retardant include brominated epoxy resins, brominated polystyrenes, brominated polycarbonates, and brominated polyphenylene ethers. Examples of the inorganic flame retardant include aluminum hydroxide, magnesium hydroxide, zinc hydroxide, and titanium hydroxide. These flame retardants can be used in combination with an auxiliary flame retardant to enhance flame retardant performance. Specific examples of auxiliary flame retardants include antimony compounds and nitrogen-containing compounds.

Any of the following compounds can be added to a PPS resin composition according to the embodiment of the present invention to modify the properties of the resin composition: a plasticizer such as a polyalkyleneoxide oligomer compound, a thioether compound, an ester compound, or an organophosphorus compound; a crystal nucleating agent, such as an organophosphorus compound or a polyetheretherketone; a mold release agent, such as a montanic acid wax, a metallic soap such as lithium stearate or aluminum stearate, an ethylenediamine/stearic acid/sebacic acid condensate, and a silicone-based compound; and other typical additives, such as water, a lubricant, an antiultraviolet agent, an anti-coloring agent, a coloring agent, and a foaming agent. Each of the compounds described above should be added in an amount of not more than 5 parts by weight, more preferably in an amount of not more than 1 part by weight, since the presence of the compound in an amount of more than 10 parts by weight of the PPS resin composition of the present invention undesirably affects the original properties of the composition.

In addition, the present invention, a compatibilizing agent can be used in combination with the resins described above in the present invention to increase the compatibility with the resins. Specific examples of compatibilizing agents include organic silane compounds and epoxy resins.

As a specific example of an organic silane compound, an organic silane compound containing at least one functional group selected from isocyanate, epoxy, amino, hydroxyl, mercapto, ureido, and alkoxy groups is preferred. Specifically, preferred examples of the organic silane compound include 3-glycidoxypropyltrimethoxysilane, 3-glycidoxypropyltriethoxysilane, 3-glycidoxypropylmethyldimethoxysilane, 3-glycidoxypropylmethyldiethoxysilane, 2-(3,4-epoxycyclohexyl)ethyltrimethoxysilane, 2-(3,4-epoxycyclohexyl)ethyltriethoxysilane, *N*-(2-aminoethyl)-3-aminopropyltrimethoxysilane, *N*-(2-aminoethyl)-3-aminopropylmethyldimethoxysilane, 3-aminopropyltrimethoxysilane, 3-aminopropyltriethoxysilane, 3-aminopropylmethyldiethoxysilane, *N*-phenylaminomethyltrimethoxysilane, *N*-phenylaminopropyltrimethoxysilane, dimethoxymethyl-3-piperazinopropylsilane, 3-piperazinopropyltrimethoxysilane, 3-isocyanatopropyltrimethoxysilane, 3-isocyanatopropyltriethoxysilane, 3-isocyanatopropylmethyldimethoxysilane, 3-isocyanatopropylmethyldiethoxysilane, 3-isocyanatopropylethyldimethoxysilane, 3 -hydroxypropyltrimethoxysilane, 3-mercaptopropyltrimethoxysilane, 3-mercaptopropyltriethoxysilane, 3-mercaptomethyldimethoxysilane, and $\gamma$-ureidopropyltrimethoxysilane.

Among these organic silane compounds described above, 3-isocyanatopropyltriethoxysilane, 3-aminopropyltriethoxysilane, and 2-(3,4-epoxycyclohexyl)ethyltriethoxysilane are preferred from the viewpoint of reactivity and handling properties.

These organic alkoxysilane compounds may be used singly, or two or more of these organic alkoxysilane compounds may be used in the form of a mixture.

The amount of the organic silane compounds used in the present invention and added with respect to 100 parts by weight of a PPS resin component (a) is preferably from 0.01 part by weight to 10 parts by weight, more preferably from 0.1 part by weight to 5 parts by weight, and even more preferably from 0.3 part by weight to 3 parts by weight. An amount of the added organic silane compound of not more than 10 parts by weight is preferred because the resulting PPS resin composition can retain flame retardance. An amount of the added organic silane compound of not less than 0.01 part by weight is preferred because the reaction between the PPS resin and the organic silane compound proceeds sufficiently, resulting in higher toughness.

Specific examples of epoxy resins include glycidyl ether-type epoxy resins represented by, for example, bisphenol A-type epoxy resins, bisphenol F-type epoxy resins, brominated epoxy resins, bifunctional epoxy resins having a unique backbone, such as a biphenyl or naphthalene backbone, and multifunctional epoxy resins, such as cresol novolac-type, trisphenol-methane-type, and dicyclopentadiene-type epoxy resins; glycidylamine-type epoxy resins represented by, for example, aromatic amine-type and aminophenol-type epoxy resins; and glycidyl ester-type epoxy resins represented by hydrophthalic acid-modified and dimeric acid-modified epoxy resins. The amount of the epoxy resin added is preferably from 0.1 part by weight to 5 parts by weight and particularly preferably from 0.2 part by weight to 3 parts by weight with respect to 100 parts by weight of the total PPS resin composition.

An inorganic filler may be added to a PPS resin composition according to the embodiment of the present invention for use as long as the inorganic filler does not impair the effect of the present invention, although the inorganic filler is not an essential component. A specific example of an inorganic filler used is a fibrous filler, such as glass fiber, carbon fiber, carbon nanotube, carbon nanohorn, potassium titanate whisker, zinc oxide whisker, calcium carbonate whisker, wollastonite whisker, aluminum borate whisker, aramid fiber, alumina fiber, silicon carbide fiber, ceramic fiber, asbestos fiber, gypsum fiber, or metal fiber; or a non-fibrous filler, such as fullerene, a silicate salt such as talc, wollastonite, zeolite, sericite, mica, kaolin, clay, pyrophyllite, silica, bentonite, asbestos, or alumina silicate, silicon oxide, a metal compound such as magnesium oxide, alumina, zirconium oxide, titanium oxide, or iron oxide, a carbonate salt such as calcium carbonate, magnesium carbonate, or dolomite, a sulfate salt such as calcium sulfate or barium sulfate, glass bead, glass flake, glass powder, ceramic bead, boron nitride, silicon carbide, carbon black and silica, or graphite. Among these fillers, glass fibers, silica, and calcium carbonate are preferred, and calcium carbonate and silica are further preferred from the viewpoint of the effects as anticorrosion materials or lubricants. These inorganic fillers may be hollow, and two or more of these inorganic fillers may be used in combination. In addition, these inorganic fillers may be pretreated with a coupling agent such as an isocyanate compound, an organic silane compound, an organic titanate compound, an organoborane compound, or an epoxy compound for use. Among these compounds, calcium carbonate, silica, and carbon black are preferred as anticorrosion materials or lubricants.

The amount of the added inorganic filler is selected to be less than 10 parts by weight, preferably less than 5 parts by weight, more preferably less than 3 parts by weight, and even more preferably less than 1 part by weight, with respect to 100 parts by weight of the total PPS resin composition. The lower limit of the amount of the inorganic filler is not specifically limited, but is preferably not less than 0.0001 part by weight. The addition of inorganic fillers is effective in increasing the strength of a material, but the presence of inorganic fillers in an amount greater than 10 parts by weight unpreferably reduces toughness and flexibility. The addition of inorganic fillers such as glass fibers significantly increases the flexural modulus, making it difficult to obtain a polyphenylene sulfide resin composition having high toughness, flexibility, and flame retardance. In the present invention, the addition of inorganic fillers such as glass fibers also brings a tendency to low flame retardance.

(5) Production Method of PPS Resin Composition

Production methods of PPS resin compositions of the present invention include, for example, methods of producing a PPS resin composition in a molten state or in a solution state, and the method of producing a PPS resin composition in a molten state is preferred for use because of its simplicity. For example, melt kneading methods using an extruder or a kneader can be used to produce a PPS resin composition in a molten state, and a melt kneading method using an extruder is preferred for use from the viewpoint of productivity. For melt kneading using an extruder, at least one extruder selected from, for example, a single-screw extruder, a multi-screw extruder such as a twin-screw or four-screw extruder, and a single-screw-twin-screw combined extruder can be used, and preferably a multi-screw extruder such as a twin-screw or four-screw extruder, most preferably a twin-screw extruder, can be used for melt kneading from the viewpoint of improving kneading performance, reactivity, and productivity.

A more specific method of melt kneading preferably uses, but is not necessarily limited to, a twin-screw extruder having an LID (L: screw length, D: screw diameter) ratio of not less than 10, preferably not less than 20, and comprising two or more, preferably three or more, kneading blocks. The upper limit of the LID ratio is not specifically limited, but an

LID ratio of not more than 60 is preferred from the viewpoint of economy. In addition, the upper limit of the number of kneading blocks is also not specifically limited, but the number of kneading blocks is preferably not more than 10 from the viewpoint of productivity. The ratio of the length of the kneading blocks to the total length of the screws is preferably not less than 15%, more preferably not less than 20%, and even more preferably not less than 30%. In cases where the ratio of the length of the kneading blocks to the total length of the screws is less than 15%, the kneading strength is reduced, resulting in a coarse number average dispersion diameter of a silicone-based polymer (b) and difficulty in imparting the desired physical properties. On the other hand, the upper limit of the ratio of the length of the kneading blocks to the total length of the screws is preferably not more than 70% to prevent a resin(s) from degrading due to excessive shear heat generated during kneading.

In a preferred kneading method, the screw rotation speed is from 150 to 1000 rpm, preferably from 150 to 600 rpm, more preferably from 150 to 500 rpm, and particularly preferably from 200 to 500 rpm. In cases where the screw rotation speed is higher than 150 rpm, a sufficient kneading strength is achieved, resulting in a fine number average dispersion diameter of a silicone-based polymer (b) and impartment of the desired toughness. In cases where the screw rotation speed is higher than 1000 rpm, a resin(s) and other additives are degraded due to excessive shear heat generated during kneading, which unpreferably results in reduced toughness, poor mold fouling, and reduced moldability and processability such as burr formation due to reduced melt viscosity.

The cylinder temperature range is preferably +5°C to +100°C relative to the melting point of a PPS resin component (a), which is a temperature of 250 to 280°C. Specifically, the cylinder temperature range is preferably from 280°C to 400°C, more preferably from 280°C to 360°C, and even more preferably from 280°C to 330°C.

The order of adding raw materials during melt kneading is not specifically limited, and any of the following methods may be used: a method in which all of the raw materials are combined before all of the raw materials are melt-kneaded according to the method described above; a method in which some of the raw materials are combined and then melt-kneaded according to the method described above, and the resulting mixture is later mixed with the remaining raw materials and then melt-kneaded; a method in which some of the raw materials are combined and melt-kneaded in a twin-screw extruder, and the remaining raw materials are later fed into the extruder through a side feeder and mixed; and the like.

(6) PPS Resin Composition

In a polyphenylene sulfide resin composition of the present invention, the flexural modulus (measured for a test specimen obtained by injection molding of the polyphenylene sulfide resin composition at a cylinder temperature of 310°C and a mold temperature of 145°C in accordance with ISO 178 at a bending speed of 2 mm/min at 23°C), one of the physical properties indicating the flexibility of a material, is essentially not more than 3.0 GPa, preferably not more than 2.8 GPa, more preferably not more than 2.5 GPa, and particularly preferably not more than 2.3 GPa. Hollow tubes for piping made of the resin composition are required to be flexible from the viewpoint of bendability during manufacture and actual use of the tubes and the viewpoint of fracture prevention during press-fitting of connectors into the tubes. Therefore, the resin composition is required to have a flexural modulus of not more than 3.0 GPa. From the viewpoint of flexibility, a more preferred resin composition has a lower flexural modulus. The lower limit of the flexural modulus is not specifically limited, but cannot be less than 0.1 GPa, at which the shape of the hollow tubes can be substantially maintained. A method of producing a PPS resin composition having the properties described above comprises, but is not specifically limited to, for example, limiting the amount of an olefin elastomer (c) added in a resin composition to an amount of not less than 1 part by weight and not more than 40 parts by weight or the amount of a silicone-based polymer (b) added in a resin composition to an amount of not less than 3 parts by weight and not more than 40 parts by weight with respect to 100 parts by weight of a PPS resin component (a).

A PPS resin composition of the present invention is required to be rated V-0 in terms of flame retardance when a test specimen measured according to the UL 94 standard, which determines a flame retardance index of a material, has a thickness of 1.6 mmt or less, preferably is rated V-0 when a test specimen measured has a thickness of 1.0 mmt or less, and more preferably is rated V-0 when a test specimen measured has a thickness of 0.5 mmt or less. Although there is a general tendency for a thicker test specimen has better flame-retardant properties, a PPS resin composition of the present invention is rated V-0 even when a test specimen has a thickness of 1.6 mm or less. Such a high level of flame retardance of the PPS resin composition means that a molded product made of the PPS resin composition can have a thinner wall and also a reduced weight while having excellent flame retardance, which not only contributes to reducing human and economic losses due to fire, but also to energy saving due to weight reduction. Therefore, the PPS resin composition can be preferably used for components of automobiles such as electric vehicles. A method of producing a PPS resin composition having the properties described above comprises, but is not specifically limited to, for example, limiting the amount of a component (b) added in a resin composition to an amount of not less than 3 parts by weight and not more than 40 parts by weight with respect to 100 parts by weight of a component (a), or forming a dispersed structure of the component (b) having a number average dispersion diameter of not more than 3.0 μm in the PPS resin

composition.

In a PPS resin composition of the present invention, the tensile elongation at break (a dumbbell-shaped test specimen (ISO 527-2-1A), drawing speed: 50 mm/min, 23°C, in accordance with ISO 527-1,2 (2012)), one of the physical properties indicating the toughness of a material, is preferably not less than 10%, more preferably not less than 12.5%, even more preferably not less than 15%, particularly preferably not less than 20%, and further preferably not less than 25%. It is preferred that hollow tubes for piping or various kinds of molded products made of the resin composition have a tensile elongation at break of not less than 10% from the viewpoint of fracture prevention in actual use. A higher tensile elongation at break is preferable from the viewpoint of preventing material fracture in actual use. Although the upper limit of the tensile elongation at break is not specifically limited, the tensile elongation at break cannot substantially exceed 500%. A method of producing a PPS resin composition having the properties described above comprises, but is not specifically limited to, for example, limiting the amount of an olefin elastomer (c) added in a resin composition to an amount of not less than 1 part by weight and not more than 40 parts by weight with respect to 100 parts by weight of a PPS resin component (a) or the amount of a silicone-based polymer (b) added in a resin composition to an amount of not less than 3 parts by weight and not more than 40 parts by weight, or forming a dispersed structure of the component (b) having a number average dispersion diameter of not more than 3.0 μm in the PPS resin.

The presence of a silicone-based polymer in a PPS resin composition of the present invention enables the PPS resin composition to exhibit excellent flame retardance, even when the PPS resin composition comprises a PPS resin having higher flexibility and toughness. In order to exhibit such properties, it is necessary that in the phase structure of the PPS resin composition, the PPS resin component (a) forms a continuous phase and the silicone-based polymer (b) forms a dispersed phase in which the silicone-based polymer (b) is dispersed with a number average dispersion diameter of not more than 3.0 μm. In the phase structure of the PPS resin composition, the component (a) forms the continuous phase and the component (b) preferably forms the dispersed phase in which the component (b) is dispersed with a number average dispersion diameter of not more than 2.0 μm, more preferably not more than 1.0 μm, and particularly preferably not more than 0.5 μm. The lower limit of the number average dispersion diameter may be about 1 nm, which is the minimum dispersion diameter of a substantially incompatible system, although a smaller dispersion diameter is more preferred. On the other hand, in cases where the number average dispersion diameter is greater than 3.0 μm, it means that the silicone-based polymer is poorly dispersed in the resin composition and forms relatively large agglomerates. This state of dispersion is considered not preferred because the agglomerates act as fracture initiators in tensile or flexural tests. In addition, the dispersed phase of the relatively coarsely dispersed silicone-based polymer is not preferred because the presence of such a dispersed phase is believed to cause combustion to occur and continue, resulting in a reduction in flame retardance. As a means for controlling the number average dispersion diameter of the silicone-based polymer in the PPS resin composition to a size of not more than 3.0 μm, a preferred method satisfies conditions for melt kneading of at least components (a) and (b) in a twin-screw extruder may be conditions including an LID ratio of not less than 20, a number of kneading blocks of two or more, and a screw rotation speed of 200 to 500 rpm. In addition, increasing the melt viscosity of the PPS resin composition to 400 Pa·s or more is also preferred as a means for controlling the number average dispersion diameter of the silicone-based polymer to a size of not more than 3.0 μm. A preferred method of increasing the melt viscosity of a PPS resin composition to 400 Pa·s or more may include, for example, using an olefin elastomer (c) in combination with the components (a) and (b) or using a PPS resin having a high melt viscosity. In order to control the number average dispersion diameter of the silicone-based polymer to a size of not more than 3.0 μm, it is particularly preferred to use the melt kneading method described above in combination with increasing the melt viscosity of the PPS resin composition to 400 Pa·s or more. The melt viscosity of the PPS resin composition is more preferably not less than 500 Pa·s, even more preferably not less than 800 Pa·s, and particularly preferably not less than 1200 Pa·s from the viewpoint of further reducing the number average dispersion diameter of the high-molecular-weight silicone compound to achieve high toughness and excellent flame retardance. The upper limit of the melt viscosity of the PPS resin composition is preferably not more than 3000 Pa·s from the viewpoint of maintaining melt flowability. In addition, the higher the melt viscosity of the PPS resin composition within this melt viscosity range, the better flowability will be acheived during extrusion molding, resulting in extrusion molded products that tend to have a better appearance.

In this context, the number average dispersion diameter is determined as follows: a test specimen according to ISO 527-1-1A is formed at range of a molding temperature from the peak melting point of the PPS resin + 20 °C to the peak melting point of the PPS resin + 40°C; a thin section of not more than 0.1 μm in thickness is prepared from the core of the test specimen by cutting the dumbbell-shaped test specimen at room temperature in the cross-sectional direction perpendicular to the resin flow in the molding of the test specimen; the thin section is observed with an SU8220 field emission scanning electron microscope manufactured by Hitachi High-Technologies Corporation at a magnification of 1,000 to 5,000 times to measure the major and minor diameters of each of arbitrary 100 silicone-based polymer particles; the average of the major and minor diameters is calculated as the dispersion diameter of each dispersed particle; finally, the dispersion diameters are averaged to calculate the number average dispersion diameter. In cases where the component (b) described above forms agglomerates in the morphology (phase structure) of a PPS resin

composition of the present invention, each of the agglomerates is counted as a single dispersed phase.

In the present invention, the melt viscosity of the PPS resin composition is a value measured at a shear rate of 122 $s^{-1}$ using a Capilograph at 300°C under the condition of orifice length L (mm) / orifice diameter D (mm) = 10.

(7) PPS Resin Composition Applications

Polyphenylene sulfide resin compositions of the present invention can be molded by various molding processes, such as injection molding, extrusion molding, compression molding, blow molding, and injection-compression molding. The polyphenylene sulfide resin compositions of the present invention are suitable for use in extrusion molding or injection molding, among these molding processes. Specifically, the polyphenylene sulfide resin compositions of the present invention are both highly flexible and tough and are therefore suitable for hollow tubes for piping, particularly for pipes in automotive applications, such as ducts and coolant tubes, and for pipes in plumbing applications, in which the pipes are required to have heat resistance and low water absorption. In addition, the polyphenylene sulfide resin compositions of the present invention are also suitable for tubes for piping in urban air mobility applications, in which the tubes are required to have both excellent properties and light weight. Moreover, greater safety can be provided in these applications if these pipes/tubes have one of the properties of the polyphenylene sulfide resin compositions of the present invention, namely flame retardance.

Injection-molded products may be used, for example, for electrical equipment parts, such as power generators, motors, voltage transformers, current transformers, voltage regulators, rectifiers, inverters, relays, power contacts, switches, contact-breakers, knife switches, opposite pole rods, and electrical equipment housings; electronic parts, represented by sensors, LED lamps, connectors, sockets, resistors, relay cases, microswitches, coil bobbins, condensers, variable condenser cases, optical pickups, oscillators, various terminal boards, transformers, plugs, printed circuit boards, tuners, speakers, microphones, headphones, micromotors, magnetic head bases, power modules, semiconductor, liquid crystals, FDD (floppy disk drive) carriages, FDD chassis, motor brush holders, parabolic antennas, computer-related parts, and the like; components of electrical home/office appliances, represented by components of VTRs (video tape recorders), television sets, irons, hair dryers, rice cookers, microwave ovens, audio systems, acoustic equipment, for example Audio-LaserDiscs (registered trademark) and compact discs, lighting equipment, refrigerators, air conditioners, typewriters, word processors, and the like; equipment-related parts, represented by office computer-related parts, telephone-related parts, facsimile machine-related parts, copying machine-related parts, cleaning tools, motor components, writing machine-related parts, typewriter-related parts, and the like; optical device/precision instrument-related parts, represented by microscopes, binoculars, cameras, clocks/watches, and the like; automobile/vehicle-related parts, such as alternator terminals, alternator connectors, IC regulators, potentiometer bases for light dimmers, various valves such as exhaust gas valves, various pipes and ducts in fuel, exhaust, and air intake systems, turbo ducts, air intakes nozzle snorkels, intake manifolds, fuel pumps, engine coolant joints, carburetor main bodies, carburetor spacers, exhaust gas sensors, coolant sensors, oil temperature sensors, brake pad wear sensors, throttle position sensors, crankshaft position sensors, air flowmeters, brake pad wear sensors, thermostat bases for air conditioners, warm air flow control valves, brush holders for radiator motors, water pump impellers, turbine vanes, wiper motor components, distributors, starter switches, starter relays, transmission wire harness, window washer nozzles, air conditioner switch cover, coils for fuel solenoid valves, fuse connectors, horn terminals, insulating boards for electrical components, step motor rotors, lamp sockets, lamp reflectors, lamp housings, brake pistons, solenoid bobbins, engine oil filters, crush pads, Insulok ties, and ignition cases; gasket materials for primary or secondary batteries for mobile phones, smartphones, notebook personal computers, tablet personal computers, video cameras, hybrid vehicles, electric vehicles, and the like.

Examples of extrusion-molded products include cylindrical bars, square bars, sheets, films, tubes, and pipes. Specifically, extrusion-molded products may be used, for example, for electrical insulation materials for use in motors for water heaters, motors for air conditioners, driving motors, and the like, film capacitors, speaker diaphragms, magnetic recording tape, printed circuit board materials, peripheral parts of printed circuit boards, seamless belts, semiconductor packages, semiconductor carrier trays, manufacturing/mold release films, protecting films, film sensors for automobiles, insulating tapes for wire and cables, insulating washes for use in lithium ion batteries, tubes for hot or cold water or chemicals, tubes for fuel circulation in automobiles, tubes for hot or cold water, chemicals, or fuel circulation in urban air mobility vehicles, hot water piping systems, chemical piping systems such as in chemical plants, piping systems for ultra-pure water or ultra-pure solvent circulation, piping systems for automobiles, pipes for fluorocarbon or supercritical carbon dioxide refrigerant, workpiece-retaining rings for polishing machines, and the like. Other examples of uses of extrusion-molded products include, for example, coated winding wires for motors or coils in hybrid vehicles, electric vehicles, fuel cell vehicles, railway cars, and power plants, heat-resistant electric wire cables for home appliances, wire harnesses or control wires such as flat cables used for wiring in automobiles, and coated winding wires for signal transformers or on-vehicle transformers for use for communication and transmission, for high-frequency use, for audios, for instrumentation, and the like.

Blow-molded products may be used, for example, for fuel tanks, oil tanks, resonators, intercoolers, intake

manifolds, turbo ducts, intake/exhaust ducts, radiator pipes, radiator headers, expansion tanks, and oil circulation pipes for automobiles.

These various molded products can certainly be subjected to secondary processes, such as hot plate welding, laser welding, induction heating welding, high frequency welding, spin welding, vibration welding, ultrasonic welding, and injection welding.

Examples

The present invention will be more specifically described below by way of examples, but the present invention is not limited to these examples.

In Examples and Comparative Examples, the following materials were used as a polyphenylene sulfide resin (a), a silicone-based polymer (b), an olefin elastomer (c), and other additives (d).

[(a) Polyphenylene Sulfide Resin (a-1, a-2, a-3, a-4, a-5)]

[Reference Example 1: PPS resin (a-1)]

In an autoclave equipped with an agitator, 8267.37 g of 47.5% sodium hydrosulfide (70.00 mol), 2923.88 g of 96% sodium hydroxide (70.17 mol), 11434.50 g of *N*-methyl-2-pyrrolidone (NMP) (115.50 mol), 1894.20 g of sodium acetate (23.10 mol), and 10500 g of ion exchange water were added. The resulting mixture was gradually heated to 230°C for about 3 hours under a nitrogen stream at normal pressure to remove 14780.1 g of water and 280 g of NMP by distillation, and the reaction vessel was then cooled to 160°C. The amount of water remaining in the system with respect to 1 mole of added alkali metal sulfide was 1.06 moles, including the amount of water consumed in the hydrolysis of NMP. In addition, the amount of released hydrogen sulfide with respect to 1 mole of added alkali metal sulfide was 0.017 mole.

Then, 10458.90 g of *p*-dichlorobenzene (71.15 mol) and 9078.30 g of NMP (91.70 mol) were added to the reaction vessel, and the resulting reaction vessel was sealed under nitrogen gas. The reaction mixture was stirred at 240 rpm and heated to 240°C at a rate of 0.6°C/min and maintained at 240°C for 40 minutes to allow the reaction to proceed, and then heated to 275°C at a rate of 0.8°C/min. Then, 2394 g (133 mol) of ion exchange water was added to the autoclave under pressure while the reaction mixture was cooled to 250°C at a rate of 1.3°C/min. Subsequently, the reaction mixture was cooled to 200°C at a rate of 1.0°C/min and then rapidly cooled to near room temperature.

The contents were removed from the autoclave, diluted in 26300 g of NMP, and then filtered through a sieve (80 mesh) to separate a solid from the solvent. The resulting particles were washed with 31900 g of NMP and then filtered. The particles were washed several times with 56000 g of ion exchange water, filtered, and then washed with 70000 g of 0.05% by weight aqueous acetic acid solution and filtered. The particles were washed with 70000 g of ion exchange water and filtered, and the resulting hydrated PPS particles were air-dried at 80°C and then dried at 120°C under reduced pressure. The resulting PPS resin (a-1) had a non-Newtonian index of 1.25, a weight average molecular weight of 54,000, a melting point of 280°C, a carboxyl group amount of 42 μmol/g, and a melt viscosity of 170 Pa·s .

[Reference Example 2: PPS resin (a-2)]

In an autoclave equipped with an agitator and a bottom drain valve, 8.27 kg of 47.5% sodium hydrosulfide (70.00 mol), 2.91 kg of 96% sodium hydroxide (69.80 mol), 11.45 kg of *N*-methyl-2-pyrrolidone (NMP) (115.50 mol), and 10.5 kg of ion exchange water were added. The resulting mixture was gradually heated to 245°C for about 3 hours under a nitrogen stream at normal pressure to remove 14.78 kg of water and 0.28 kg of NMP by distillation, and the reaction vessel was then cooled to 200°C. The amount of water remaining in the system with respect to 1 mole of added alkali metal sulfide was 1.06 moles, including the amount of water consumed in the hydrolysis of NMP. In addition, the amount of released hydrogen sulfide with respect to 1 mole of added alkali metal sulfide was 0.02 mole.

Then, the reaction mixture was cooled to 200°C, and 10.48 kg of *p*-dichlorobenzene (71.27 mol) and 9.37 kg of NMP (94.50 mol) were added to the reaction vessel, and the resulting reaction vessel was sealed under nitrogen gas. The reaction mixture was stirred at 240 rpm and heated from 200°C to 270°C at a rate of 0.6°C/min. The reaction mixture was maintained at 270°C to allow the reaction to proceed for 100 minutes. The bottom drain valve of the autoclave was then opened to flush the contents into a vessel equipped with an agitator under pressurized nitrogen for 15 minutes, and the reaction mixture in the vessel was stirred at 250°C for a certain time to remove most of the NMP.

The resulting solid and 76 liters of ion exchange water were added to an autoclave equipped with an agitator, and the solid was washed at 70°C for 30 minutes and then suction-filtered through a glass filter. Then, 76 liters of ion exchange water heated at 70°C was applied to the glass filter and suction-filtered to obtain a cake.

The resulting cake and 90 liters of ion exchange water were placed in an autoclave equipped with an agitator,

and acetic acid was added to the mixture to a pH of 7. The autoclave was purged with nitrogen, and then heated to 192°C and held for 30 minutes. The contents were then removed from the autoclave after cooling.

The contents were suction-filtered through a glass filter, and 76 liters of ion exchange water at 70°C was then applied to the glass filter and suction-filtered to obtain a cake. The resulting cake was dried at 120°C under a nitrogen gas stream to obtain dry PPS. The resulting PPS was heat-treated at 200°C under an oxygen gas stream to obtain a cross-linked PPS resin (a-2). The resulting PPS resin (a-2) had a non-Newtonian index of 1.45, a weight average molecular weight of 56000, a melting point of 280°C, a carboxyl group amount of 25 μmol/g, and a melt viscosity of 155 Pa·s.

[Reference Example 3: PPS resin (a-3)]

In an autoclave equipped with an agitator, 8267.37 g of 47.5% sodium hydrosulfide (70.00 mol), 2923.88 g of 96% sodium hydroxide (70.17 mol), 11434.50 g of *N*-methyl-2-pyrrolidone (NMP) (115.50 mol), 1894.20 g of sodium acetate (23.10 mol), and 10500 g of ion exchange water were added. The resulting mixture was gradually heated to 230°C for about 3 hours under a nitrogen stream at normal pressure to remove 14780.1 g of water and 280 g of NMP by distillation, and the reaction vessel was then cooled to 160°C. The amount of water remaining in the system with respect to 1 mole of added alkali metal sulfide was 1.06 moles, including the amount of water consumed in the hydrolysis of NMP. In addition, the amount of released hydrogen sulfide with respect to 1 mole of added alkali metal sulfide was 0.017 mole.

Then, 10420 g of *p*-dichlorobenzene (70.89 mol) and 9078.30 g of NMP (91.70 mol) were added to the reaction vessel, and the resulting reaction vessel was sealed under nitrogen gas. The reaction mixture was stirred at 240 rpm and heated to 240°C at a rate of 0.6°C/min and maintained at 240°C for 40 minutes to allow the reaction to proceed, and then heated to 275°C at a rate of 0.8°C/min. Then, 2394 g (133 mol) of ion exchange water was added to the autoclave under pressure while the reaction mixture was cooled to 250°C at a rate of 1.3°C/min. Subsequently, the reaction mixture was cooled to 200°C at a rate of 1.0°C/min and then rapidly cooled to near room temperature.

The contents were removed from the autoclave, diluted in 26300 g of NMP, and then filtered through a sieve (80 mesh) to separate a solid from the solvent. The resulting particles were washed with 31900 g of NMP and then filtered. The particles were washed several times with 56000 g of ion exchange water, filtered, and then washed with 70000 g of 0.05% by weight aqueous acetic acid solution and filtered. The particles were washed with 70000 g of ion exchange water and filtered, and the resulting hydrated PPS particles were air-dried at 80°C and then dried at 120°C under reduced pressure. The resulting PPS resin (a-3) had a non-Newtonian index of 1.35, a weight average molecular weight of 73000, a melting point of 280°C, a carboxyl group amount of 35 μmol/g, and a melt viscosity of 398 Pa.s.

[Reference Example 4: PPS resin (a-4)]

In an autoclave equipped with an agitator, 8.26 kg of 47.5% sodium hydrosulfide (70.0 mol), 2.94 kg of 96% sodium hydroxide (70.6 mol), 11.45 kg of *N*-methyl-2-pyrrolidone (NMP) (115.5 mol), 1.61 kg of sodium acetate (19.6 mol), and 5.50 kg of ion exchange water were added. The resulting mixture was gradually heated to 240°C under a nitrogen stream at normal pressure to remove 9.82 kg of water and 0.28 kg of NMP by distillation, after which the heating was stopped and cooling of the reaction mixture was initiated. At this point, the amount of water remaining in the system with respect to 1 mole of added alkali metal hydrosulfide was 1.01 moles, including the amount of water consumed in the hydrolysis of NMP. In addition, the amount of released hydrogen sulfide was 1.4 moles, which means that the sulfurizing agent remaining in the system after the dehydration process was 68.6 moles. The amount of sodium hydroxide newly produced by the release of hydrogen sulfide was 1.4 moles.

Then, 10.33 kg of *p*-dichlorobenzene (*p*-DCB) (70.2 mol), 0.044 kg of 1,2,4-trichlorobenzene (TCB) (0.24 mol), and 9.37 kg of NMP (94.5 mol) were added to the reaction vessel, and the resulting reaction vessel was sealed under nitrogen gas. The reaction mixture was stirred and heated from 200°C to 270°C and maintained at 270°C for 180 minutes to allow the polymerization reaction to proceed. After the reaction, the reaction mixture was cooled to 200°C at a rate of 1.0°C/min and then rapidly cooled to near room temperature. The reaction mixture was diluted with NMP to form a slurry, and the resulting slurry was stirred at 85°C for 30 minutes and then filtered through an 80 mesh wire sieve to separate a solid. The resulting solid was washed with NMP and filtered in the same manner. The resulting solid was diluted in ion exchange water and the resulting mixture was stirred at 70°C for 30 minutes and then filtered through an 80 mesh wire sieve to collect a solid. The same operation was repeated four times. Then, 1 g of the PPS resin was washed with an aqueous solution containing 0.5% by weight of calcium acetate and filtered through an 80 mesh wire sieve to collect a solid. The solid was further washed with ion exchange water and filtered, and the resulting hydrated PPS particles were air-dried at 80°C and then dried at 120°C under reduced pressure. The resulting PPS resin (a-4) had a non-Newtonian index of 2.05, a weight average molecular weight of 90,000, a melting point of 275°C, and a melt viscosity of 2761 Pa·s.

[Reference Example 5: PPS resin (a-5)]

In an autoclave equipped with an agitator, 8267.37 g of 47.5% sodium hydrosulfide (70.00 mol), 2962.50 g of 96% sodium hydroxide (71.10 mol), 11434.50 g of *N*-methyl-2-pyrrolidone (NMP) (115.50 mol), 516.60 g of sodium acetate (6.30 mol), and 10500 g of ion exchange water were added. The resulting mixture was gradually heated to 230°C for about 3 hours under a nitrogen stream at normal pressure to remove 14780.1 g of water and 280 g of NMP by distillation, and the reaction vessel was then cooled to 160°C. The amount of water remaining in the system with respect to 1 mole of added alkali metal sulfide was 1.06 moles, including the amount of water consumed in the hydrolysis of NMP. In addition, the amount of released hydrogen sulfide with respect to 1 mole of added alkali metal sulfide was 0.017 mole. Then, 10363.50 g of *p*-dichlorobenzene (70.50 mol) and 9078.30 g of NMP (91.70 mol) were added to the reaction vessel, and the resulting reaction vessel was sealed under nitrogen gas. The reaction mixture was stirred at 240 rpm and heated to 270°C at a rate of 0.6°C/min and maintained at 270°C for 140 minutes. Then, 2520 g (140 mol) of ion exchange water was added to the autoclave under pressure while the reaction mixture was cooled to 250°C at a rate of 1.3°C/min. Subsequently, the reaction mixture was cooled to 200°C at a rate of 1.0°C/min and then rapidly cooled to near room temperature. The contents were removed from the autoclave, diluted in 26300 g of NMP, and then filtered through a sieve (80 mesh) to separate a solid from the solvent. The resulting particles were washed with 31900 g of NMP and then filtered. The particles were washed several times with 56000 g of ion exchange water, filtered, and then washed with 70000 g of 0.05% by weight aqueous acetic acid solution and filtered. The particles were washed with 70000 g of ion exchange water and filtered, and the resulting hydrated PPS particles were air-dried at 80°C and then dried at 120°C under reduced pressure. The resulting PPS resin (a-5) had a non-Newtonian index of 1.10, a weight average molecular weight of 42000, a melting point of 280°C, a carboxyl group amount of 45 μmol/g, and a melt viscosity of 74 Pa·s.

[Reference Example 6: mixture of PPS resin (a-3) (83% by weight) and PPS resin (a-4) (17% by weight)]

non-Newtonian index: 1.50, melting point: 280°C, melt viscosity: 560 Pa·s.

[Reference Example 7: mixture of PPS resin (a-3) (50% by weight) and PPS resin (a-4) (50% by weight)]

non-Newtonian index: 1.75, melting point: 280°C, melt viscosity: 890 Pa·s.

[Silicone-Based Polymer (b) (b-1, b-2, b-3)]

b-1: silicone-acrylic core-shell rubber (KaneAce MR-01 manufactured by Kaneka Corporation), average primary particle diameter: 0.13 μm
b-2: methacryl-modified silicone elastomer powder (EP-2720 manufactured by Dow Chemical Company), average primary particle diameter: 1.8 μm
b-3: epoxy-terminated polydimethylsiloxane

[Olefin Elastomer (c) (c-1)]

c-1: ethylene-glycidyl methacrylate copolymer (BONDFAST E olefin resin manufactured by Sumitomo Chemical Company, Limited, melting point: 103°C, MFR: 3 g/10 minutes (190°C, load: 21.2 N)), reactive functional group amount: 12% by weight

[(d) Other Additives (d-1, d-2)]

d-1: 3-isocyanatepropyltriethoxysilane (KBE-9007N manufactured by Shin-Etsu Silicone)
d-2: glass fiber (T760H manufactured by Nippon Electric Glass Co., Ltd.)

In the following examples, material properties were evaluated using the following methods.

[Flexural Test]

Pellets of a PPS resin composition were dried with a hot air dryer at 130°C for 3 hours and then fed into an injection molding machine (SE-75DUZ) manufactured by Sumitomo Heavy Industries, Ltd., in which the cylinder and mold temperatures were set to 310°C and 145°C, respectively. Injection molding was performed using a mold having the shape of a Type A1 test specimen specified by ISO 20753 (2008) under the condition that a molten resin passes through the cross-section of the square body of the molding machine at an average speed of 400 ± 50 mm/sec to obtain a test specimen. A parallel-sided central section was cut from the test specimen to obtain a Type B2 test specimen. This test specimen was acclimatized for 16 hours at a temperature of 23°C and a relative humidity of 50% and then subjected to a flexural modulus measurement according to ISO 178 (2010) under the following conditions: span length, 64 mm; test speed, 2 mm/min.

[Flame Retardancy Test]

Pellets of a PPS resin composition were dried with a hot air dryer at 130°C for 3 hours and then fed into an injection molding machine (SE-75DUZ) manufactured by Sumitomo Heavy Industries, Ltd., in which the cylinder and mold temperatures were set to 320°C and 150°C, respectively, to obtain test specimens for flame retardance evaluation. The flame retardance of the test specimens was evaluated according to the evaluation criteria defined for the UL94 vertical test. Flame retardance is rated in the descending order of V-0 > V-1 > V-2. If a specimen did not meet the criterion for rank V-2, the specimen was marked "Out". The test specimens used were 1.6 mm, 1.0 mm, or 0.5 mm thick.

[Tensile Test]

A Type A1 test specimen, prepared in the same manner as in the flexural test, was acclimatized for 16 hours at a temperature of 23°C and a relative humidity of 50% and then subjected to a tensile elongation at break (tensile strain) measurement according to ISO 527-1, -2 (2012) under the following conditions: distance between chucks, 114 mm; test speed, 50 mm/min.

[Number Average Dispersion Diameter of Component (b)]

A thin section of not more than 0.1 μm in thickness was prepared from the core of the parallel-sided central section of a Type A1 test specimen, prepared in the same manner as in the flexural test, by cutting the dumbbell-shaped test specimen at room temperature in the cross-sectional direction perpendicular to the resin flow in the molding of the test specimen, and the thin section was observed with an SU8220 field emission scanning electron microscope manufactured by Hitachi High-Technologies Corporation at a magnification of 1,000 to 5,000 times. For 100 arbitrarily selected particles of component (b), the major and minor diameters were measured, and the major and minor diameters of each particle were averaged to calculate the dispersion diameter of the particle. The dispersion diameters of the particles were then averaged to determine the number average dispersion diameter. In cases where the silicone-based polymer component (b) forms agglomerates, each of the agglomerates is counted as a single dispersed phase to determine the number average dispersion diameter.

[Number Average Dispersion Diameter of Olefin Elastomer (c)]

A thin section of not more than 0.1 μm in thickness was prepared from the core of the parallel-sided central section of a Type A1 test specimen, prepared in the same manner as in the flexural test, by cutting the dumbbell-shaped test specimen at room temperature in the cross-sectional direction perpendicular to the resin flow in the molding of the test specimen, and the thin section was observed with an SU8220 field emission scanning electron microscope manufactured by Hitachi High-Technologies Corporation at a magnification of 1,000 to 5,000 times. For 100 arbitrarily selected particles of olefin elastomer (c), the major and minor diameters were measured, and the major and minor diameters of each particle were averaged to calculate the dispersion diameter of the particle of olefin elastomer (c). The dispersion diameters of the particles of olefin elastomer (c) were then averaged to determine the number average dispersion diameter.

[Non-Newtonian Index]

The non-Newtonian index of a PPS resin was determined by the following method. The non-Newtonian index was calculated by measuring the shear stress at a shear rate of 60-6080 $s^{-1}$ using a Capilograph 1B (with a capillary having a length of 10 mm and a diameter of 1 mm), manufactured by Toyo Seiki Seisaku-sho, Ltd., at 300°C and fitting

the relationship between the shear rate and the shear stress to the following formula (1).

$$SR = K \cdot SS^N \quad (1)$$

(wherein N is a non-Newtonian index, and SR is a shear rate (1/sec), and SS is a shear stress (dyne/cm$^2$), and K is a coefficient).

[Melt Viscosity]

The melt viscosity of a PPS resin composition was determined by the following method. The melt viscosity was a value measured at a shear rate of 122 $s^{-1}$ using a Capilograph 1B (with a capillary having a length of 10 mm and a diameter of 1 mm), manufactured by Toyo Seiki Seisaku-sho, Ltd., at 300°C under the condition of orifice length L (mm) / orifice diameter D (mm) = 10.

[GPC Measurement]

The number average molecular weight (Mn) and weight average molecular weight (Mw) of a PPS resin were determined by using a gel permeation chromatography (GPC) system, manufactured by Senshu Scientific Co., Ltd., under the following conditions with respect to polystyrene.

Instrument: Senshu Scientific SSC-7110
Column: Shodex UT806M × 2
Eluent: 1-chloronaphthalene
Detector: differential refractometer
Column temperature: 210°C
Pre-incubator temperature: 250°C
Pump-incubator temperature: 50°C
Detector temperature: 210°C
Flor rate: 1.0 mL/min
Sample injection volume: 300 μL

[Examples 1 to 6 and 8 to 10 and 12 to 21, Comparative Examples 1 to 13]

A PPS resin, an olefin elastomer, a silicone-based polymer, and other additives were dry-blended according to each of the compositions shown in Tables 1 to 3, and the resulting mixture was then fed into a TEX30α twin screw extruder (with an LID ratio of 30 and three kneading blocks) manufactured by The Japan Steel Works, Ltd. and melt-kneaded. Kneading was performed under conditions including a temperature of 300°C and a screw speed of 300 rpm. This kneading process is referred to as Process A (Tables 1 to 3). The resulting mixture was pelletized with a strand cutter, and the resulting pellets, dried at 130°C for 3 hours, were then used for injection molding. The results as shown in Tables 1 to 3 were obtained in terms of number average dispersion diameter of silicone-based polymer and olefin elastomer, flexural modulus, flame retardance, tensile elongation at break, and melt viscosity.

[Examples 7 and 11]

Pellets of resin compositions were prepared by melt kneading under the same conditions as in Example 1, except that the number of kneading blocks was limited to one, and the various properties were evaluated on the resulting pellets. The melt kneading process under the conditions is referred to as Process B. The results as shown in Tables 1 and 2 were obtained.

Table 1

| | | | | Examp le 1 | Examp le 2 | Examp le 3 | Examp le 4 | Examp le 5 | Examp le 6 | Examp le 7 |
|---|---|---|---|---|---|---|---|---|---|---|
| Composition | (a) PPS resin | a-1 | part by weight | | | | | | | |
| | | a-2 | part by weight | | | | | | | |
| | | a-3 | part by weight | 100 | 83 | 50 | 50 | 50 | 50 | 100 |
| | | a-4 | part by weight | | 17 | 50 | 50 | 50 | 50 | |
| | | a-5 | part by weight | | | | | | | |
| | (b) silicone-based polymer | b-1 | part by weight | 11 | 11 | 11 | 25 | | | 11 |
| | | b-2 | part by weight | | | | | 11 | 25 | |
| | | b-3 | part by weight | | | | | | | |
| | (c) olefin elastomer | c-1 | part by weight | | | | | | | |
| | (d) other additives | d-1 | part by weight | | | | | | | |
| | | d-2 | part by weight | | | | | | | |
| Melt kneading Process | | | | A | A | A | A | A | A | B |

(continued)

| | | | | Examp le 1 | Examp le 2 | Examp le 3 | Examp le 4 | Examp le 5 | Examp le 6 | Examp le 7 |
|---|---|---|---|---|---|---|---|---|---|---|
| Properties of Compositions | Number average dispersion diameter of component (b) | | μm | 1.3 | 0.8 | 0.3 | 0.8 | 1.8 | 2.0 | 2.5 |
| | Number average dispersion diameter of component (c) | | μm | - | - | - | - | - | - | - |
| | Flexural modulus | | GPa | 2.7 | 2.7 | 2.8 | 2.2 | 3.0 | 2.2 | 2.8 |
| | Flame retardance | 1.6 mm thick | - | V-0 | V-0 | V-0 | V-0 | V-0 | V-0 | V-0 |
| | | 1.0 mm thick | - | V-0 | V-0 | V-0 | V-0 | V-0 | V-1 | V-0 |
| | | 0.5 mm thick | - | V-0 | V-0 | V-0 | V-0 | V-1 | V-2 | V-1 |
| | Tensile elongation at break | | % | 17 | 26 | 33 | 22 | 24 | 19 | 11 |
| | Melt viscosity (300°C, 122 $s^{-1}$) | | Pa·s | 411 | 591 | 960 | 1136 | 1269 | 1546 | 380 |

Table 2-1

| | | | | Examp le 8 | Examp le 9 | Examp le 10 | Examp le 11 | Examp le 12 | Examp le 13 | Examp le 14 |
|---|---|---|---|---|---|---|---|---|---|---|
| Composition | (a) PPS resin | a-1 | part by weight | 100 | | | | | | |
| | | a-2 | part by weight | | 100 | | 100 | | | |
| | | a-3 | part by weight | | | 100 | | 100 | 100 | 100 |
| | | a-4 | part by weight | | | | | | | |
| | | a-5 | part by weight | | | | | | | |
| | (b) silicone-based polymer | b-1 | part by weight | 6 | 6 | 6 | 6 | 9 | | 6 |
| | | b-2 | part by weight | | | | | | 9 | |
| | | b-3 | part by weight | | | | | | | |
| | (c) olefin elastomer | c-1 | part by weight | 6 | 6 | 6 | 6 | 9 | 9 | 6 |
| | (d) other additives | d-1 | part by weight | 0.6 | 0.6 | 0.6 | 0.6 | 0.6 | 0.6 | |
| | | d-2 | part by weight | | | | | | | |

(continued)

| Melt kneading Process | | | | A | A | A | B | A | A | A |
|---|---|---|---|---|---|---|---|---|---|---|
| Properties of Compositions | Number average dispersion diameter of component (b) | | μm | 1.9 | 1.3 | 0.3 | 2.2 | 0.4 | 1.9 | 0.3 |
| | Number average dispersion diameter of component (c) | | μm | 0.2 | 0.2 | 0.1 | 0.6 | 0.2 | 0.2 | 0.1 |
| | Flexural modulus | | GPa | 2.8 | 2.8 | 2.8 | 2.8 | 2.4 | 2.4 | 2.8 |
| | Flame retardance | 1.6 mm thick | - | V-0 | V-0 | V-0 | V-0 | V-0 | V-0 | V-0 |
| | | 1.0 mm thick | - | V-0 | V-0 | V-0 | V-0 | V-0 | V-1 | V-0 |
| | | 0.5 mm thick | - | V-1 | V-0 | V-0 | V-1 | V-0 | V-2 | V-0 |
| | Tensile elongation at break | % | | 11 | 13 | 25 | 11 | 30 | 30 | 23 |
| | Melt viscosity (300°C, 122 $s^{-1}$) | Pa·s | | 251 | 345 | 516 | 380 | 871 | 845 | 536 |

Table 2-2

| | | | | Examp le 15 | Examp le 16 | Examp le 17 | Examp le 18 | Examp le 19 | Examp le 20 | Examp le 21 |
|---|---|---|---|---|---|---|---|---|---|---|
| Composition | (a) PPS resin | a-1 | part by weight | | | | | | | |
| | | a-2 | part by weight | | | | | | | |
| | | a-3 | part by weight | 100 | 50 | 100 | 100 | 50 | 50 | 50 |
| | | a-4 | part by weight | | 50 | | | 50 | 50 | 50 |
| | | a-5 | part by weight | | | | | | | |
| | (b) silicone-based polymer | b-1 | part by weight | 9 | 9 | 12 | 12 | 19 | 27 | 20 |
| | | b-2 | part by weight | | | | | | | |
| | | b-3 | part by weight | | | | | | | |
| | (c) olefin elastomer | c-1 | part by weight | 9 | 9 | 3 | 6 | 6 | 7 | 13 |
| | (d) other additives | d-1 | part by weight | | | | | | | |
| | | d-2 | part by weight | | | | | | | |

(continued)

| Melt kneading Process | | | | A | A | A | A | A | A | A |
|---|---|---|---|---|---|---|---|---|---|---|
| Properties of Compositions | Number average dispersion diameter of component (b) | | μm | 0.4 | 0.2 | 1.2 | 0.2 | 0.5 | 0.8 | 0.5 |
| | Number average dispersion diameter of component (c) | | μm | 0.2 | 0.1 | 0.1 | 0.1 | 0.1 | 0.2 | 0.5 |
| | Flexural modulus | | GPa | 2.3 | 2.3 | 2.6 | 2.4 | 2 | 1.7 | 1.7 |
| | Flame retardance | 1.6 mm thick | - | V-0 | V-0 | V-0 | V-0 | V-0 | V-0 | V-0 |
| | | 1.0 mm thick | - | V-0 | V-0 | V-0 | V-0 | V-0 | V-0 | V-0 |
| | | 0.5 mm thick | - | V-0 | V-0 | V-0 | V-1 | V-0 | V-1 | V-1 |
| | Tensile elongation at break | | % | 28 | 40 | 17 | 41 | 33 | 23 | 35 |
| | Melt viscosity (300°C, 122 $s^{-1}$) | | Pa·s | 620 | 1483 | 439 | 830 | 1445 | 1604 | 1856 |

Table 3-1

| | | | | Comparative Example 1 | Comparative Example 2 | Comparative Example 3 | Comparative Example 4 | Comparative Example 5 | Comparative Example 6 | Comparative Example 7 |
|---|---|---|---|---|---|---|---|---|---|---|
| Composition | (a) PPS resin | a-1 | part byweight | | | | | | | |
| | | a-2 | part by weight | 100 | | | | | | |
| | | a-3 | part by weight | | 100 | | | | | |
| | | a-4 | part by weight | | | | | | | |
| | | a-5 | part by weight | | | 100 | 100 | 100 | 100 | 100 |
| | (b) silicone-based polymer | b-1 | part by weight | | | 2 | 11 | 20 | 25 | 20 |
| | | b-2 | part by weight | | | | | | | |
| | | b-3 | part by weight | | | | | | | |
| | (c) olefin elastomer | c-1 | part by weight | | | | | | | |
| | (d) other additives | d-1 | part by weight | | | | | | | |
| | | d-2 | part by weight | | | | | | | 30 |
| Melt kneading Process | | | | A | A | A | A | A | A | A |

(continued)

| | | | | Comparative Example 1 | Comparative Example2 | Comparative Example3 | Comparative Example4 | Comparative Example 5 | Comparative Example6 | Comparative Example7 |
|---|---|---|---|---|---|---|---|---|---|---|
| Properties of Compositions | Number average dispersion diameter of component (b) | | μm | - | - | 2.9 | 3.2 | 4.2 | 3.8 | 3.2 |
| | Number average dispersion diameter of component (c) | | μm | - | - | - | - | - | - | - |
| | Flexural modulus | | GPa | 3.6 | 3.5 | 3.3 | 2.8 | 2.3 | 2.1 | 6.9 |
| | Flame retardance | 1.6 mm thick | - | V-0 | V-0 | V-0 | V-0 | V-0 | V-0 | V-0 |
| | | 1.0 mm thick | - | V-0 | V-0 | V-0 | V-0 | V-0 | V-0 | V-1 |
| | | 0.5 mm thick | - | V-0 | V-0 | V-0 | V-1 | V-1 | V-1 | V-1 |
| | Tensile elongation at break | | % | 7 | 6 | 8 | 5 | 6 | 6 | 4 |
| | Melt viscosity (300°C, 122 $s^{-1}$) | | Pa·s | 155 | 398 | 239 | 281 | 304 | 292 | 381 |

Table 3-2

| | | | | Compara tive Example 8 | Compara tive Example 9 | Compara tive Example 10 | Compara tive Example 11 | Compara tive Example 12 | Compara tive Example 13 |
|---|---|---|---|---|---|---|---|---|---|
| Composition | (a) PPS resin | a-1 | part by weight | | | | | | |
| | | a-2 | part by weight | | 100 | 100 | 100 | | 100 |
| | | a-3 | part by weight | | | | | 100 | |
| | | a-4 | part by weight | | | | | | |
| | | a-5 | part by weight | 100 | | | | | |
| | (b) silicone-based polymer | b-1 | part by weight | 43 | | | 12 | 7 | |
| | | b-2 | part by weight | | | | | | |
| | | b-3 | part by weight | | | | | | 2 |
| | (c) olefin elastomer | c-1 | part by weight | | 5 | 12 | | 41 | 16 |
| | (d) other additives | d-1 | part by weight | | 0.6 | 0.6 | 0.6 | | |
| | | d-2 | part by weight | | | | | | |
| Melt kneading Process | | | | A | A | A | A | A | A |

(continued)

| | | | | Compara tive Example 8 | Compara tive Example 9 | Compara tive Example 10 | Compara tive Example 11 | Compara tive Example 12 | Compara tive Example 13 |
|---|---|---|---|---|---|---|---|---|---|
| Properties of Compositions | Number average dispersion diameter of component (b) | | μm | 5.8 | - | - | 3.1 | 0.2 | 1.3 |
| | Number average dispersion diameter of component (c) | | μm | - | 0.1 | 0.2 | - | 0.6 | 0.2 |
| | Flexural modulus | | GPa | 1.3 | 3.2 | 2.8 | 2.8 | 1.2 | 2.4 |
| | Flame retardance | 1.6 mm thick | - | V-1 | V-0 | out | V-0 | out | out |
| | | 1.0 mm thick | - | V-2 | V-0 | out | V-0 | out | out |
| | | 0.5 mm thick | - | V-2 | V-1 | out | V-1 | out | out |
| | Tensile elongation at break | | % | 3 | 19 | 17 | 4 | 17 | 25 |
| | Melt viscosity (300°C, 122 $s^{-1}$) | | Pa·s | 377 | 348 | 618 | 314 | 1554 | 743 |

The results of the examples and comparative examples are compared and explained.

In Examples 1 to 7, the PPS resin compositions comprising a polyphenylene sulfide resin (a) and a silicone-based polymer (b) according to a specified composition, in which the component (b) is dispersed with a number average dispersion diameter of not more than 3.0 μm, have both high flexibility and excellent flame retardance and exhibit high toughness as evidenced by the values of tensile elongation at break. Even in Examples 1 to 3, the smaller the number average dispersion diameter of the component (b), the higher the toughness. In addition, the comparison of Examples 3 and 4 with Examples 5 and 6 indicates that the use of a silicone-based polymer (b) having a smaller average primary particle diameter causes a reduction in the number average dispersion diameter of the component (b), which results in higher toughness and more excellent flame retardance. The composition of Example 7, which is prepared by a different kneading process and in which the silicone-based polymer is less dispersed than in the composition of Example 1, exhibits lower flame retardance and tensile elongation at break.

The simple PPS resins of Comparative Examples 1 and 2 and the composition of Comparative Example 3, which contains a small amount of a silicone-based polymer, are highly flame retardant and stiff, but have low tensile elongation at break and are therefore difficult to use for components requiring a certain level of toughness.

The compositions of Comparative Examples 4 to 6 and 11 contain a silicone-based polymer and achieve high flexibility and excellent flame retardance, but exhibit low tensile elongation at break. This is probably related to a coarse number average dispersion diameter of the silicone-based polymer due to the low melt viscosity of the PPS resin compositions. The composition of Comparative Example 7, which contains glass fibers, tends to have a smaller number average dispersion diameter than the composition of Comparative Example 5, but the presence of the glass fibers appears to result in a significant increase in flexural modulus and a decrease in flame retardance.

The results of Examples 1 and 18 indicate that high toughness and flexibility can be achieved by adding an olefin elastomer further. The results of Examples 8 to 10, 15, and 16 indicate that a higher non-Newtonian index of the PPS resin or a smaller number average dispersion diameter of the silicone-based polymer tends to cause a significant increase in toughness and improvement in flame retardance. The comparison of Examples 12 with Example 13 indicates that the use of a silicone-based polymer (b) having a smaller average primary particle diameter causes a reduction in the number average dispersion diameter of the component (b), which results in higher toughness and more excellent flame retardance. The composition of Example 11, which is prepared by a different kneading process and in which the silicone-based polymer is less dispersed than in the composition of Example 9, exhibits lower flame retardance and tensile elongation at break.

The compositions of Comparative Examples 9 and 10 tend to be less flame retardant due to the olefin elastomer, although the presence of the olefin elastomer imparts high flexibility and tensile elongation at break.

The composition of Comparative Example 13, which has the same composition as in Example 1 of the prior art literature 4 (Sample No. 4), exhibits flexibility and high tensile elongation at break, but has poor flame retardance, indicating that the preparation of a PPS resin composition having flexibility and certain levels of flame retardance and toughness, which is an object of the present invention, has failed.

These results indicate that only PPS resin compositions having the constituent elements of the present invention can achieve high flexibility, flame retardance, and toughness.

## Claims

1. A polyphenylene sulfide resin composition comprising (a) a polyphenylene sulfide resin (hereinafter referred to as "component (a)") and (b) a silicone-based polymer (hereinafter referred to as "component (b)"), wherein the content of the component (b) is not less than 3 parts by weight and not more than 40 parts by weight with respect to 100 parts by weight of the component (a); in terms of morphology (phase structure), the polyphenylene sulfide resin composition has a phase-separated structure wherein the component (a) forms a continuous phase and the component (b) forms a dispersed phase in which the component (b) is dispersed with a number average dispersion diameter of not more than 3.0 μm; a test specimen obtained by injection molding of the polyphenylene sulfide resin composition at a cylinder temperature of 310°C and a mold temperature of 145°C has a flexural modulus of not more than 3.0 GPa as determined by a flexural test according to ISO 178 (2010); and, a test specimen of the polyphenylene sulfide resin composition having a thickness of not more than 1.6 mm is rated V-0 in terms of flame retardance according to the UL 94 standard.

2. The polyphenylene sulfide resin composition of claim 1, wherein the polyphenylene sulfide resin composition comprises (c) an olefin elastomer in an amount of not less than 1 part by weight and not more than 40 parts by weight with respect to 100 parts by weight of the component (a).

3. The polyphenylene sulfide resin composition of claim 1 or 2, wherein a test specimen of the polyphenylene sulfide

resin composition having a thickness of not more than 1.0 mm is rated V-0 in terms of flame retardance according to the UL 94 standard.

**4.** The polyphenylene sulfide resin composition of any one of claims 1 to 3, wherein the polyphenylene sulfide resin composition has a tensile elongation at break of not less than 10% measured by a tensile test according to ISO 527-1, -2 (2012).

**5.** The polyphenylene sulfide resin composition of any one of claims 1 to 4, wherein in terms of morphology (phase structure), the polyphenylene sulfide resin composition has a phase-separated structure wherein the component (a) forms a continuous phase and the component (b) forms a dispersed phase in which the component (b) is dispersed with a number average dispersion diameter of not more than 1.0 μm.

**6.** The polyphenylene sulfide resin composition of any one of claims 1 to 5, wherein the non-Newtonian index N of the component (a) in the polyphenylene sulfide resin composition is calculated to be not less than 1.30 according to the following formula (1) by measuring the shear stress at a shear rate of 60-6080 $s^{-1}$ using a Capilograph at 300°C under the condition of orifice length L (mm) / orifice diameter D (mm) = 10:

$$SR = K \cdot SS^{N} \qquad (1)$$

(wherein N is a non-Newtonian index, and SR is a shear rate (1/sec), and SS is a shear stress (dyne/$cm^2$), and K is a coefficient).

**7.** The polyphenylene sulfide resin composition of any one of claims 1 to 6, wherein the melt viscosity of the polyphenylene sulfide resin composition measured at a shear rate of 122 $s^{-1}$ using a Capilograph at 300°C under the condition of orifice length L (mm) / orifice diameter D (mm) = 10 is not less than 400 Pa·s.

**8.** The polyphenylene sulfide resin composition of any one of claims 1 to 7, wherein the component (b) in the polyphenylene sulfide resin composition is a silicone-based core-shell rubber.

**9.** A molded product made of the polyphenylene sulfide resin composition of any one of claims 1 to 8.

**10.** The molded product of claim 9 made of the polyphenylene sulfide resin composition, wherein the molded product has a hollow shape and is used for pipes.

## INTERNATIONAL SEARCH REPORT

International application No.
**PCT/JP2022/011571**

### A. CLASSIFICATION OF SUBJECT MATTER

***C08L 23/00***(2006.01)i; ***C08L 81/02***(2006.01)i; ***C08L 83/04***(2006.01)i; ***C08G 75/0209***(2016.01)i; ***C08G 75/0259***(2016.01)i; ***F16L 11/04***(2006.01)i; ***F16L 9/12***(2006.01)i
FI: C08L81/02; C08G75/0209; C08G75/0259; F16L9/12; C08L83/04; C08L23/00; F16L11/04

According to International Patent Classification (IPC) or to both national classification and IPC

### B. FIELDS SEARCHED

Minimum documentation searched (classification system followed by classification symbols)

C08L23/00; C08L81/02; C08L83/04; C08G75/0209; C08G75/0259; F16L11/04; F16L9/12

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | JP 2012-46721 A (TORAY IND., INC.) 08 March 2012 (2012-03-08) claims, paragraphs [0010], [0020], [0021], [0072], [0073], [0113]-[0124], [0152], reference examples, examples | 1-10 |
| X | JP 2016-74872 A (TORAY IND., INC.) 12 May 2016 (2016-05-12) claims, paragraphs [0006], [0016], [0135], [0175]-[0179], reference examples, example 16 | 1-10 |
| A | JP 2019-6884 A (TORAY IND., INC.) 17 January 2019 (2019-01-17) | 1-10 |
| A | WO 2018/124079 A1 (POLYPLASTICS CO., LTD.) 05 July 2018 (2018-07-05) | 1-10 |
| A | WO 2018/003700 A1 (TORAY IND., INC.) 04 January 2018 (2018-01-04) | 1-10 |
| A | WO 2018/151191 A1 (TORAY IND., INC.) 23 August 2018 (2018-08-23) | 1-10 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **17 May 2022** | **31 May 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | Telephone No. |

Form PCT/ISA/210 (second sheet) (January 2015)

**INTERNATIONAL SEARCH REPORT**
**Information on patent family members**

International application No.
**PCT/JP2022/011571**

| Patent document cited in search report | Publication date (day/month/year) | Patent family member(s) | Publication date (day/month/year) |
|---|---|---|---|
| JP 2012-46721 A | 08 March 2012 | (Family: none) | |
| JP 2016-74872 A | 12 May 2016 | (Family: none) | |
| JP 2019-6884 A | 17 January 2019 | (Family: none) | |
| WO 2018/124079 A1 | 05 July 2018 | (Family: none) | |
| WO 2018/003700 A1 | 04 January 2018 | US 2019/0330470 A1<br>EP 3480257 A1<br>CN 109415562 A<br>KR 10-2019-0022470 A | |
| WO 2018/151191 A1 | 23 August 2018 | US 2019/0367730 A1<br>EP 3584282 A1<br>CN 110225947 A<br>KR 10-2019-0112261 A | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 61021156 A
- JP 2013006919 A
- JP 2017222867 A
- JP 2017214586 A